# EUROPEAN PATENT APPLICATION

(11) **EP 4 530 806 A1**
(43) Date of publication of application: **02.04.2025**
(21) Application number: 23835679.4
(22) Date of filing: 17.05.2023
(51) Int. Cl.: G06F 3/041, G06F 1/16, G06F 3/046, G06F 3/044, G06F 3/0354

(54) **ELECTRONIC DEVICE COMPRISING ELECTROMAGNETIC INDUCTION PANEL**

(30) Priority: 05.07.2022 KR 20220082648; 02.08.2022 KR 20220096416
(71) Applicant: Samsung Electronics Co., Ltd., Suwon-si, Gyeonggi-do 16677 (KR)
(72) Inventor: JI, Yonghun, Suwon-si Gyeonggi-do 16677 (KR); PARK, Hyungu, Suwon-si Gyeonggi-do 16677 (KR); RHEE, Minsu, Suwon-si Gyeonggi-do 16677 (KR)
(74) Representative: Gulde & Partner
(86) International application number: PCT/KR2023/006715
(87) International publication number: WO 2024/010210

(57) **Abstract**

The electronic device comprises: a first housing; a second housing rotatably connected to the first housing; a hinge structure for enabling the electronic device to be switched between an unfolded state and a folded state; a display; an electromagnetic induction panel; at least one electronic component including a ferromagnetic body; a processor; and a memory. The processor can identify the state of the electronic device on the basis of an induced current value induced in the electromagnetic induction panel by means of the at least one electronic component.

## Description

### [Technical Field]

The present disclosure relates to an electronic device comprising an electromagnetic induction panel.

### [Background Art]

An electronic device including a large-screen display may increase user utilization. As demand for an electronic device having high portability increases, the electronic device may include a deformable display. The deformable display may be slidably deformable, foldably deformable, or rollably deformable.

The above-described information may be provided as a related art for the purpose of helping to understand the present disclosure. No claim or determination is raised as to whether any of the above-described information can be applied as a prior art related to the present disclosure.

### [Disclosure]

### [Technical Solution]

An electronic device according to an embodiment may comprise a first housing, a second housing, a hinge structure, a display, an electromagnetic induction panel, at least one electronic component, a processor, and a memory. According to an embodiment, the first housing may include a first surface and a second surface opposite to the first surface. The second housing may include a third surface and a fourth surface opposite to the third surface. The hinge structure may rotatably connect the first housing and the second housing. The hinge structure may enable the electronic device to be switchable into an unfolded state in which a direction in which the first surface faces and a direction in which the third surface faces are same, or a folded state in which the first surface and the third surface face each other. The display may be disposed above the first surface and the third surface, across the hinge structure. The electromagnetic induction panel may include a first portion and a second portion. The first portion may be disposed between the second surface and the display. The second portion may be disposed between the fourth surface and the display. The electromagnetic induction panel may be configured to receive an input from an external electronic device. The at least one electronic component may be disposed between the electromagnetic induction panel and the second surface. The at least one electronic component may include a ferromagnetic material. The memory may be configured to store first data obtained based on a current value induced in the second portion according to a change in a distance between the at least one electronic component and the second portion, in the direction in which the first surface faces. The processor may be configured to identify a state of the electronic device, based on second data related to the current value induced in the second portion according to a change in the distance between the at least one electronic component and the second portion, in the direction in which the first surface faces.

An electronic device according to an embodiment may comprise a first housing, a second housing, a third housing, a first hinge structure, a second hinge structure, a display, an electromagnetic induction panel, at least one electronic component, a magnet, a sensor, a processor, and a memory. According to an embodiment, the first housing may include a first surface and a second surface opposite to the first surface. The second housing may include a third surface and a fourth surface opposite to the third surface. The third housing may include a fifth surface and a sixth surface opposite to the fifth surface. The first hinge structure may rotatably connect the first housing and the second housing. The first hinge structure may enable the electronic device to be switchable into a first unfolded state in which a direction in which the first surface faces and a direction in which the third surface faces are same, or a first folded state in which the first surface and the third surface face each other. The second hinge structure may rotatably connect the first housing and the third housing. The second hinge structure may enable the electronic device to be switchable into a second unfolded state in which the direction in which the first surface faces and a direction in which the fifth surface faces are same, or a second folded state in which the first surface and the fifth surface face each other. The display may be disposed above the first surface, the third surface, and the fifth surface, across the first hinge structure and the second hinge structure. The electromagnetic induction panel may include a first portion, a second portion, and a third portion. The first portion may be disposed between the second surface and the display. The second portion may be disposed between the fourth surface and the display. The third portion may be disposed between the sixth surface and the display. The electromagnetic induction panel may be configured to receive an input from an external electronic device. The at least one electronic component may be disposed between the electromagnetic induction panel and the second surface. The at least one electronic component may include a ferromagnetic material. The magnet may be disposed in the second housing. The sensor may be disposed in the third housing. The sensor may be configured to detect magnetic force of the magnet. The memory may be configured to store first data obtained based on a current induced in the second portion according to a change in a distance between the at least one electronic component and the second portion, in the direction in which the first surface faces. The processor may be configured to identify the first folded state or the first unfolded state, based on second data related to the current induced in the second portion according to a change in the distance between the at least one electronic component and the second portion, in the direction in which the first surface faces. The processor may be configured to identify the second folded state or the second unfolded state, based on third data related to a change in magnetic force according to a change in a distance between the sensor and the magnet detected through the sensor.

### [Description of the Drawings]

FIG. 1 is a block diagram of an electronic device in a network environment according to an embodiment.
FIG. 2A illustrates an unfolded state of an exemplary electronic device.
FIG. 2B illustrates a folded state of an exemplary electronic device.
FIG. 2C is an exploded view of an exemplary electronic device.
FIG. 3A is a cross-sectional view of an exemplary electronic device cut along line A-A' of FIG. 2A.
FIG. 3B is a cross-sectional view of an exemplary electronic device cut along line B-B' of FIG. 2B.
FIG. 3C is a block diagram of an exemplary electronic device.
FIG. 4A is a flowchart illustrating an operation of identifying a state of an exemplary electronic device.
FIG. 4B illustrates a posture in which an exemplary electronic device is switched from a folded state to an unfolded state.
FIG. 4C illustrates a posture in which an exemplary electronic device is switched from an unfolded state to a folded state.
FIG. 5A is a flowchart illustrating an operation in which an exemplary electronic device identifies a state of the electronic device through at least one electronic component.
FIG. 5B is a flowchart illustrating an operation in which an exemplary electronic device identifies a state of the electronic device in an unfolded state.
FIG. 5C is a flowchart illustrating an operation in which an exemplary electronic device identifies a state of the electronic device in a folded state.
FIG. 6 is a flowchart illustrating an operation in which an exemplary electronic device controls a display based on a state of the electronic device.
FIG. 7A illustrates an unfolded state of an exemplary electronic device.
FIG. 7B illustrates a folded state of an exemplary electronic device.
FIG. 7C is a block diagram of an exemplary electronic device.
FIG. 8A is a flowchart illustrating an operation in which an exemplary electronic device identifies a state of the electronic device.
FIG. 8B is a cross-sectional view of an exemplary electronic device cut along line C-C' of FIG. 7A.
FIG. 8C is a cross-sectional view of an exemplary electronic device cut along line D-D' of FIG. 7B.
FIG. 9 is a flowchart illustrating an operation in which an exemplary electronic device controls a display based on a state of the electronic device.

### [Mode for Invention]

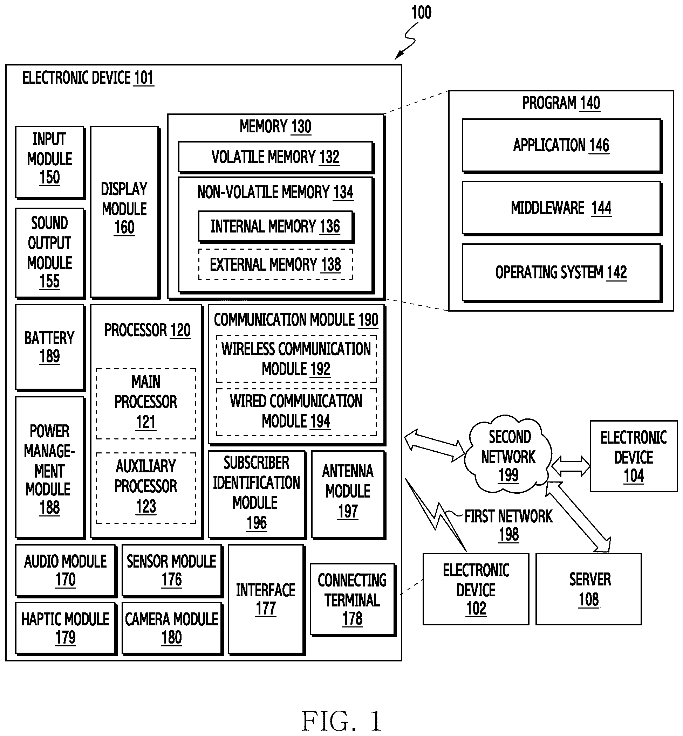

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

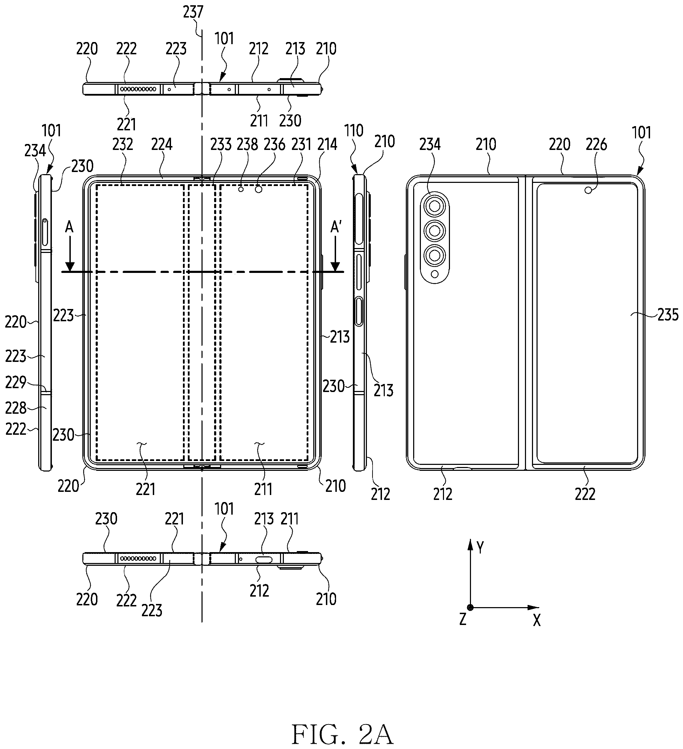

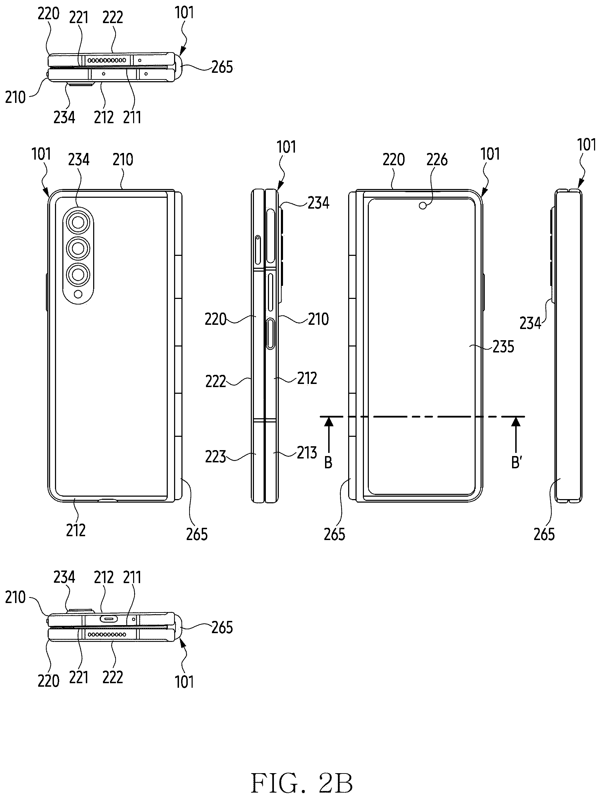

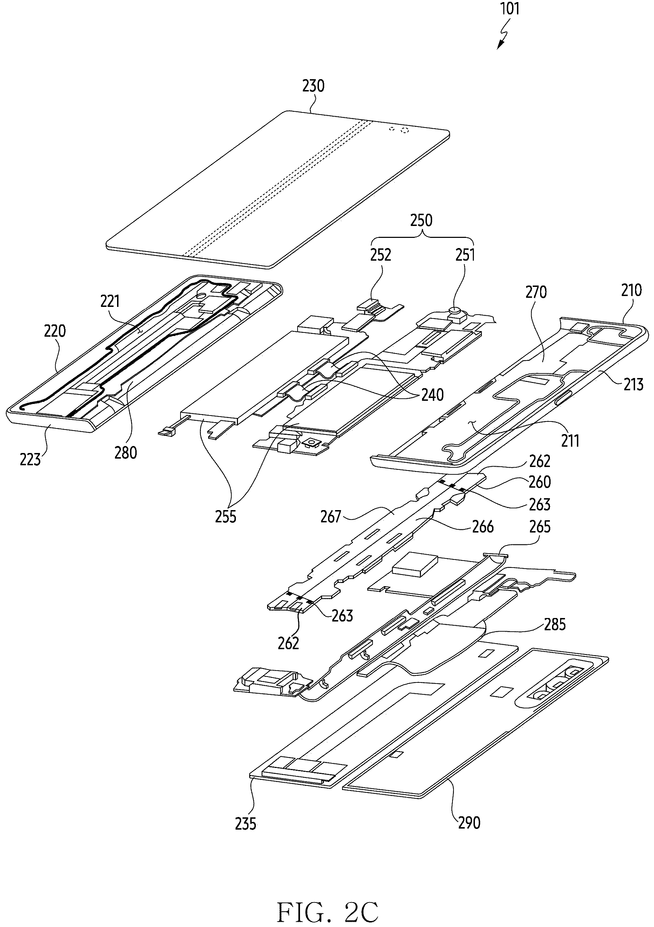

FIG. 2A illustrates an unfolded state of an exemplary electronic device. FIG. 2B illustrates a folded state of an exemplary electronic device. FIG. 2C is an exploded view of an exemplary electronic device.

Referring to FIGS. 2A, 2B, and 2C, an electronic device 101 may include a first housing 210, a second housing 220, and a display 230. The electronic device 101 may be referred to as a device in which the first housing 210 and the second housing 220 may be folded or unfolded each other. The electronic device 101 may be referred to as a foldable electronic device.

In an embodiment, the first housing 210 may include a first surface 211, a second surface 212 faced away from the first surface 211, and a first lateral surface 213 surrounding at least a portion of the first surface 211 and the second surface 212. In an embodiment, the second surface 212 may further include at least one camera 234 exposed through a portion of the second surface 212. In an embodiment, the first housing 210 may include a first protective member 214 disposed along a periphery of the first surface 211. In an embodiment, the first housing 210 may provide a space formed by the first surface 211, the second surface 212, and the lateral surface 213 as a space for mounting components of the electronic device 101. In an embodiment, the first lateral surface 213 and a second lateral surface 223 may include a conductive material, a non-conductive material, or a combination thereof. For example, the second lateral surface 223 may include a conductive member 228 and a non-conductive member 229. The conductive member 228 may include a plurality of conductive members and may be spaced apart from each other. The non-conductive member 229 may be disposed between the plurality of conductive members. An antenna structure may be formed by a portion or a combination of the plurality of conductive members and a plurality of non-conductive members.

In an embodiment, the second housing 220 may include a third surface 221, a fourth surface 222 faced away from the third surface 221, and a second lateral surface 223 surrounding at least a portion of the third surface 221 and the fourth surface 222. In an embodiment, the fourth surface 222 may further include a display panel 235 disposed on the fourth surface 222. A camera 226 may be disposed inside the second housing 220 toward the fourth surface 222, in order to obtain an external image through the fourth surface 222. The camera 226 may be covered by the display panel 235, by being disposed in a lower portion of the display panel 235. In an embodiment, the camera 226 may be disposed in the lower portion of the display panel 235, and the display panel 235 may include an opening to transmit light from the outside to the camera 226 by being aligned with a lens of the camera 226. According to an embodiment, each of the first housing 210 and the second housing 220 may include each of the first protective member 214 and a second protective member 224. The first protective member 214 and the second protective member 224 may be disposed on the first surface 211 and the third surface 221 along a periphery of the display 230. The first protective member 214 and the second protective member 214 may prevent an inflow of a foreign substance (e.g., dust or moisture), through a gap between the display 230 and the first housing 210 and the second housing 220. The first protective member 214 may be disposed along a periphery of a first display region 231, and the second protective member 224 may be disposed along a periphery of a second display region 232. The first protection member 214 may be formed by being attached to the first lateral surface 213 of the first housing 210, or may be formed integrally with the first lateral surface 213. The second protective member 224 may be formed by being attached to the second lateral surface 213 of the second housing 220, or may be formed integrally with the second lateral surface 223.

In an embodiment, the second lateral surface 223 may be pivotably or rotatably connected to the first lateral surface 213 through a hinge structure 260 mounted on a hinge cover 265. The hinge structure 260 may include a hinge module 262, a first hinge plate 266, and a second hinge plate 267. The first hinge plate 266 may be connected to the first housing 210, and the second hinge plate 267 may be connected to the second housing 220. In an embodiment, the second housing 220 may provide a space formed by the third surface 221, the fourth surface 222 faced away from the third surface 221, and the lateral surface 223 surrounding at least a portion of the third surface 221 and the fourth surface 222 as a space for mounting the components of the electronic device 101. In an embodiment, the display 230 may include a window exposed toward the outside. The window may protect a surface of the display 230 and may transfer visual information provided from the display 230 to the outside by being formed as a protective layer. The window may include a glass material such as an ultra-thin glass (UTG) or a polymer material such as polyimide (PI). In an embodiment, the display 230 may be disposed on the first surface 211 of the first housing 210 and the third surface 221 of the second housing 220 across the hinge cover 265. The display 230 may include the first display region 231 disposed on the first surface 211 of the first housing, the second display region 232 disposed on the third surface 221 of the second housing, and a third display region 233 between the first display region 231 and the second display region 232. The first display region 231, the second display region 232, and the third display region 233 may form a front surface of the display 230.

According to an embodiment, an opening may be formed in a portion of a screen display region of the display 230, or a recess or an opening may be formed in a support member (e.g., bracket) supporting the display 230. The electronic device 101 may include at least one or more of a sensor module 238 aligned with the recess or the opening, and a camera 236. For example, the first display region 231 may further include the camera 236 capable of obtaining an image from the outside through a portion of the first display region 231, and the sensor module 238 generating an electrical signal or a data value corresponding to an external environmental condition. According to an embodiment, at least one or more of the sensor module 238 and the camera 236 may be included on a rear surface of the display 230 corresponding to the first display region 231 or the second display region 232 of the display 230. For example, the at least one of the camera 236 and the sensor module 238 may be disposed under the display 230 and surrounded by the display 230. The at least one of the camera 236 and the sensor module 238 may not be exposed to the outside by being surrounded by the display 230. However, it is not limited thereto, and the display 230 may include an opening exposing the camera 236 and the sensor module 238 to the outside. Although not illustrated in FIGS. 2A and 2B, in an embodiment, the display 230 may further include a rear surface opposite to the front surface. In an embodiment, the display 230 may be supported by a first support member 270 of the first housing 210 and a second support member 280 of the second housing 220.

In an embodiment, the hinge structure 260 may be configured to rotatably connect the first support member 270 forming the first housing 210 and being fastened to the first hinge plate 266, and the second support member 280 forming the second housing 220 and being fastened to the second hinge plate 267.

In an embodiment, the hinge cover 265 surrounding the hinge structure 260 may be at least partially exposed through a space between the first housing 210 and the second housing 220 while the electronic device 101 is in the folded state. In another embodiment, the hinge cover 265 may be covered by the first housing 210 and the second housing 220 while the electronic device 101 is in the unfolded state.

In an embodiment, the electronic device 101 may be folded with respect to a folding axis 237 passing through the hinge cover 265. For example, the hinge cover 265 may be disposed between the first housing 210 and the second housing 220 of the electronic device 101 to be capable of bending, flexing, or folding the electronic device 101. For example, the first housing 210 may be connected to the second housing 220, and rotate with respect to the folding axis 237, through the hinge structure 260 mounted on the hinge cover 265. For example, the hinge structure 260 may include hinge modules 262 disposed in both ends of the first hinge plate 266 and the second hinge plate 267. Since the hinge module 262 includes hinge gears engaged with each other therein, the hinge module 262 may rotate the first hinge plate 266 and the second hinge plate 267 with respect to the folding axis. The first housing 210 coupled to the first hinge plate 266 may be connected to the second housing 220 coupled to the second hinge plate 267, and may rotate with respect to the folding axis by the hinge modules 262.

In an embodiment, in the electronic device 101, the first housing 210 and the second housing 220 may be folded, in order to face each other, by rotating with respect to the folding axis 237. In an embodiment, the electronic device 101 may be folded so that the first housing 210 and the second housing 220 stack or overlap each other.

Referring to FIG. 2C, the electronic device 101 may include the first support member 270, the second support member 280, the hinge structure 260, the display 230, a printed circuit board 250, a battery 255, the hinge cover 265, an antenna 285, the display panel 235, and a rear plate 290. According to an embodiment, the electronic device 101 may omit at least one of components or may additionally include another component. At least one of the components of an electronic device 300 may be the same as or similar to at least one of the components of the electronic device 101 of FIG. 1, 2A, or 2B, and a redundant description will be omitted hereinafter.

The first housing 210 and the second housing 220 may support a flexible display (e.g., the display 230 of FIG. 2A). A flexible display panel may include a front surface and a rear surface facing the front surface that provide information by emitting light. In case that a first surface (e.g., the first surface 211 of FIG. 2A) of the first housing 210 faces a third surface (e.g., the third surface 221 of FIG. 2A) of the second housing 220, the flexible display panel may be in the folded state in which a surface of the first display region 231 of the flexible display panel and a surface of the second display region 232 face each other. In case that the first surface 211 of the first housing 210 and the third surface 221 of the second housing 220 face the same direction, the display 230 may be in the unfolded state in which the first display region 231 and the second display region 232 of the display 230 face the same direction. The display 230 may be referred to as the flexible display in terms of being deformed according to the state of the electronic device.

In an embodiment, the electronic device 101 may provide the unfolded state in which the first housing 210 and the second housing 220 are fully folded out by the hinge structure 260. The first support member 270 may switch the electronic device 101 into the folded state or the unfolded state, by being connected to the second support member 280 through the hinge structure 260. The first support member 270 and the second support member 280 attached to the hinge plates 266 and 267 of the hinge structure 260 may move, by rotation of a hinge gear 263. The hinge plates 266 and 267 may include the first hinge plate 266 coupled to the first support member 270 and the second hinge plate 267 coupled to the second support member 280. The electronic device 101 may be switched into the folded state or the unfolded state, by the rotation of the hinge gear 263.

The hinge structure 260 may include the hinge module 262, the first hinge plate 266, and the second hinge plate 267. The hinge module 262 may include the hinge gear 263 enabling the first hinge plate 266 and the second hinge plate 267 to be pivotable. The hinge gear 263 may be engaged with each other and rotate to rotate the first hinge plate 266 and the second hinge plate 267. The hinge module 262 may be a plurality of hinge modules. Each of the plurality of hinge modules may be disposed in both ends formed by the first hinge plate 266 and the second hinge plate 267.

The first hinge plate 266 may be coupled to the first support member 270 of the first housing 210, and the second hinge plate 267 may be coupled to the second support member 280 of the second housing 220. The first housing 210 and the second housing 220 may rotate to correspond to rotation of the first hinge plate 266 and the second hinge plate 267.

The first housing 210 may include the first support member 270 and the second support member 280. The first support member 270 may be partially surrounded by the first lateral surface 213, and the second support member 280 may be partially surrounded by the second lateral surface 223. The first support member 270 may be integrally formed with the first lateral surface 213, and the second support member 280 may be integrally formed with the second lateral surface 223. According to an embodiment, the first support member 270 may be formed separately from the first lateral surface 213, and the second support member 280 may be formed separately from the second lateral surface 223. The first lateral surface 213 and the second lateral surface 223 may be used as an antenna, by being formed of a metal material, a non-metal material, or a combination thereof.

A surface of the first support member 270 may be coupled with the display 230 and another surface of the first support member 270 may be coupled with the rear plate 290. A surface of the second support member 280 may be coupled with the display 230 and another surface of the second support member 280 may be coupled with the display panel 235.

The printed circuit board 250 and the battery 255 may be disposed between a surface formed by the first support member 270 and the second support member 280 and a surface formed by the display panel 235 and the rear plate 290. The printed circuit board 250 may be separated, in order to be disposed in each of the first support member 270 of the first housing 210 and the second support member 280 of the second housing 220. A Shape of a first printed circuit board 251 disposed in the first support member 270 and a second printed circuit board 252 disposed in the second support member 280 may be different from each other, according to a space inside the electronic device. Components for implementing various functions of the electronic device 10 may be mounted in the first printed circuit board 251 and the second printed circuit board 252. According to an embodiment, components for implementing overall function of the electronic device 101 may be mounted on the first printed circuit board 251, and electronic components for implementing some functions of the first printed circuit board 251, or components for driving the display panel 235, which is disposed in a fourth surface 222, may be disposed in the second printed circuit board 252. The first printed circuit board 251 and the second printed circuit board 252 may be electrically connected by a flexible printed circuit board 240.

For example, the battery 255, which is a device for supplying power to at least one component of the electronic device 101, may include, for example, a non-rechargeable primary battery, a rechargeable secondary battery, or a fuel cell. At least a portion of the battery 255 may be disposed on substantially the same plane as the printed circuit board 250. A surface formed as the substantially same plane of the printed circuit board 250 and the battery 255 may be disposed on a surface (e.g., a surface facing the second surface 212 and the fourth surface 222 or a surface facing the display panel 235 and the rear plate 290) of the first support member 270 and the second support member 280. For example, the display 230 may be disposed in the first surface 211 and the third surface 221, and the printed circuit board 250 and the battery 255 may be disposed in the second surface 212 and the fourth surface 222 facing the surface in which the display 230 is disposed.

In an embodiment, the antenna 285 may be disposed between the rear plate 290 and the battery 255. The antenna 285 may include, for example, a near field communication (NFC) antenna, a wireless charging antenna, and/or a magnetic secure transmission (MST) antenna. The antenna 285 may, for example, perform short-range communication with an external device or wirelessly transmit and receive power required for charging.

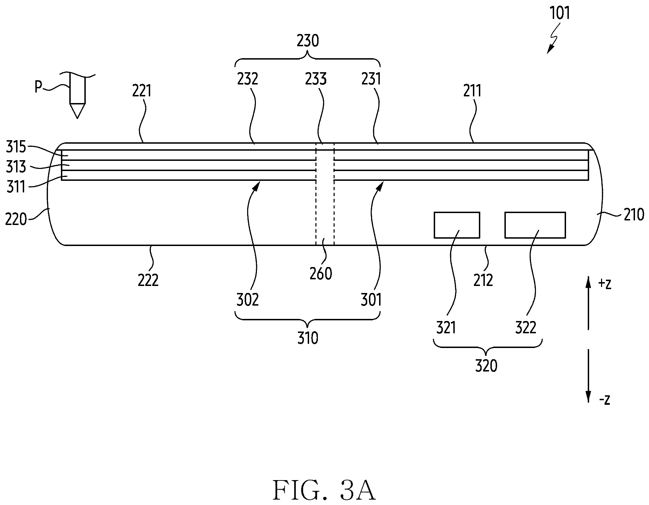

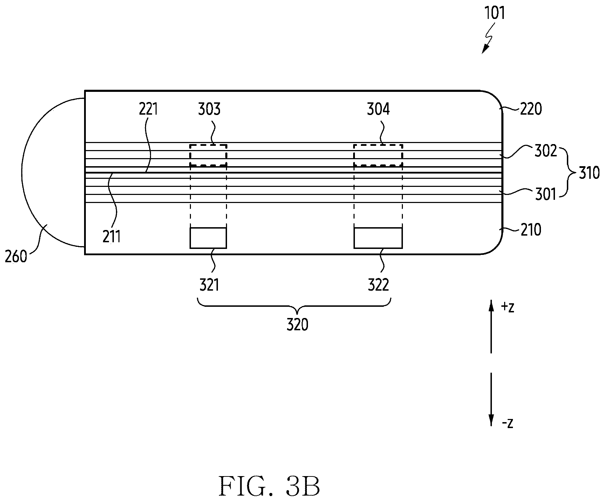

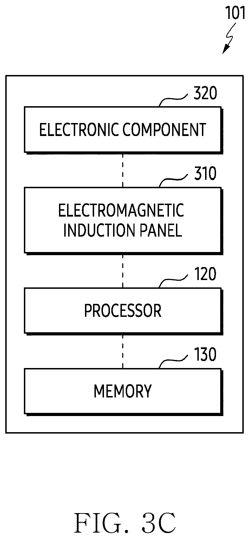

FIG. 3A is a cross-sectional view of an exemplary electronic device cut along line A-A' of FIG. 2A. FIG. 3B is a cross-sectional view of an exemplary electronic device cut along line B-B' of FIG. 2B. FIG. 3C is a block diagram of an exemplary electronic device.

Referring to FIGS. 3A, 3B, and 3C, an exemplary electronic device 101 may include a first housing 210, a second housing 220, a hinge structure 260, a display 230, an electromagnetic induction panel 310, a processor 120, and/or a memory 130. The exemplary electronic device 101 may be a device including the first housing 210 and the second housing 220 that may be folded or unfolded from each other. The exemplary electronic device 101 may be referred to as a foldable electronic device.

According to an embodiment, the first housing 210 may include a first surface 211 and a second surface 212 opposite to the first surface 211. According to an embodiment, the second housing 220 may include a third surface 221 and a fourth surface 222 opposite to the third surface 221. The first surface to the fourth surface 211, 212, 221, and 222 may form an exterior of the electronic device 101.

According to an embodiment, the hinge structure 260 may rotatably connect the first housing 210 and the second housing 220 to each other. For example, the second housing 220 may be rotated with respect to the first housing 210 through the hinge structure 260. The electronic device 101 may be switched to a folded state or an unfolded state, by a rotational movement of the second housing 220 with respect to the first housing 210. According to an embodiment, the hinge structure 260 may fasten positions of the first housing 210 and the second housing 220 in an intermediate state in which an angle between the first housing 210 and the second housing 220 has a predetermined angle (e.g., 90 degrees). The predetermined angle may be greater than the angle between the first housing 210 and the second housing 220 in the folded state and less than the angle between the first housing 210 and the second housing 220 in the unfolded state.

According to an embodiment, when the electronic device 101 is in the unfolded state, the first housing 210 and the second housing 220 may form substantially the same plane. For example, a direction in which the first surface 211 faces and a direction in which the third surface 221 faces may be substantially the same in the unfolded state. Referring to FIG. 3A, when the electronic device 101 is in the unfolded state, the first surface 211 and the third surface 221 may face the same direction (e.g., +z direction).

According to an embodiment, when the electronic device 101 is in the folded state, the first housing 210 and the second housing 220 may face each other. For example, the first surface 211 and the third surface 221 may face each other in the folded state. Referring to FIG. 3B, when the electronic device 101 is in the folded state, the direction (e.g., +z direction) in which the first surface 211 faces may be an opposite direction to the direction (e.g., -z direction) in which the third surface 221 faces.

According to an embodiment, the display 230 may be supported by at least a portion of the first housing 210 and at least a portion of the second housing 220. According to an embodiment, the display 230 may be disposed above the first surface 211 and the third surface 221, across the hinge structure 260. Referring to FIG. 3A, when the electronic device 101 is in the unfolded state, the display 230 may provide visual information displayed on a display region of the display 230 to a user, by being disposed above the first surface 211 and the third surface 221. Referring to FIG. 3B, when the electronic device 101 is in the folded state, the display 230 may be invisible from the outside.

According to an embodiment, the display 230 may be referred to as a flexible display in which at least a partial region may be deformed into a flat surface or a curved surface. For example, at least a portion of a region in contact with the hinge structure 260 of the display 230 may be a flexible folding region (e.g., the third display region 233 of FIG. 2A). According to an embodiment, the folding region 233 may substantially form the flat surface, in the unfolded state. When switching from the unfolded state to the folded state, the folding region 233 may have the curved surface.

According to an embodiment, the display 230 may include a first display region 231 and a second display region 232 that are substantially symmetrical to each other based on the folding region 233. The folding region 233 may be disposed between the first display region 231 and the second display region 232. Referring to FIG. 3A, the first display region 231 may be disposed on the first housing 210, and the second display region 232 may be disposed on the second housing 220, but is not limited thereto. The region division of the display 230 illustrated in FIG. 3A is exemplary, and the display 230 may be divided into a plurality of regions (e.g., two or four or more) according to a structure or a function.

According to an embodiment, the electromagnetic induction panel 310 may be configured to receive an input from an external electronic device p. The external electronic device p may be referred to as an electronic pen or a stylus pen configured to provide a touch input through the electromagnetic induction panel 310. The electromagnetic induction panel 310 may be configured to receive a hovering input or a touch input on the display 230. According to an embodiment, the electromagnetic induction panel 310 may be referred to as an electromagnetic resonance (EMR) panel and/or a digitizer. For example, the external electronic device p may have substantially the same shape as a shape of a pen. According to an embodiment, the external electronic device p may be detachably coupled to the electronic device 101. For example, the electronic device 101 may include an accommodation space for accommodating the external electronic device p. The external electronic device p may be inserted into the accommodation space. However, it is not limited thereto, and the external electronic device p may not be accommodated in the electronic device 101. For example, the external electronic device p may be attached to an outer surface of the electronic device 101.

According to an embodiment, the electromagnetic induction panel 310 may be configured to transmit an electromagnetic signal to the external electronic device p or receive an electromagnetic signal from the external electronic device p. For example, the processor 120 may transmit a first electromagnetic signal to the external electronic device p through the electromagnetic induction panel 310. The first electromagnetic signal received by the external electronic device p may cause electromagnetic resonance in the external electronic device p. For example, the first electromagnetic signal may cause electromagnetic induction of a coil inside the external electronic device p. A second electromagnetic signal generated by the electromagnetic resonance in the external electronic device p may be transmitted to the electromagnetic induction panel 310. For example, based on a current in a coil in which electromagnetic has been induced, the external electronic device p may generate the second electromagnetic signal, and transmit the generated second electromagnetic signal to the electromagnetic induction panel 310. By the electromagnetic induced current, the external electronic device p may generate the second electromagnetic signal without a separate power supply. The second electromagnetic signal received by the electromagnetic induction panel 310 may cause electromagnetic resonance in the electromagnetic induction panel 310. The processor 120 may identify an input from the external electronic device p, based on a third electromagnetic signal generated by the electromagnetic resonance in the electromagnetic induction panel 310.

According to an embodiment, the processor 120 may identify a type of input from the external electronic device p based on identifying a phase of the third electromagnetic signal. For example, the processor 120 may identify an input from the external electronic device p as a touch input, based on identifying that the phase of the third electromagnetic signal is less than or equal to a second threshold value. For another example, the processor 120 may identify an input from the external electronic device p as a hovering input, based on identifying that the phase of the third electromagnetic signal is greater than the second threshold value. According to an embodiment, the processor 120 may identify data related to a position of the external electronic device p, based on intensity of the third electromagnetic signal. For example, the data related to the position of the external electronic device p may include a coordinate of a portion of display regions of the display 230 corresponding to the position of the external electronic device p above the display 230.

According to an embodiment, the electromagnetic induction panel 310 may be disposed between the display 230 and the first housing 210, and between the display 230 and the second housing 220. According to an embodiment, the electromagnetic induction panel 310 may include a first portion 301 and a second portion 302. The first portion 301 may be disposed between the second surface 212 of the first housing 210 and the display 230. The first portion 301 may be configured to receive an input of the external electronic device p positioned on the first display region 231. The second portion 302 may be disposed between the fourth surface 222 of the second housing 220 and the display 230. The second portion 302 may be configured to receive an input of the external electronic device p positioned on the second display region 232. According to an embodiment, the second portion 302 may be spaced apart from the first portion 301.

According to an embodiment, the electromagnetic induction panel 310 may include a first layer 311, a second layer 313, and/or a third layer 315. The first layer 311 may include a conductive material to block an electromagnetic wave generated from the inside of the electronic device 101. The second layer 313 may shield an electromagnetic wave transmitted into the electronic device 101. For example, the second layer 313 may shield an electromagnetic wave transmitted from the external electronic device p. For example, the second layer 313 may shield an electromagnetic wave transmitted from a conductive pattern of the third layer 315 to the inside of the electronic device 101. According to an embodiment, the second layer 313 may be disposed on the first layer 311. For example, the second layer 313 may include magnetic metal powder (MMP). The magnetic metal powder may include, for example, at least one selected from among iron, aluminum, nickel, silicon, or a combination thereof. The third layer 315 may include a conductive pattern forming at least one closed-loop. The conductive pattern may be configured to generate an electromagnetic wave transmitted to the external electronic device p, or to receive an electromagnetic wave from the external electronic device p. The third layer 315 may be disposed on the second layer 313. When the electromagnetic induction panel 310 is viewed from above, the third layer 315, the second layer 313, and the first layer 311 may be sequentially stacked. However, it is not limited thereto. For example, the first layer 311 and/or the second layer 313 may be omitted. For example, the electromagnetic induction panel 310 may further include a layer for another function.

According to an embodiment, the electronic device 101 may further include at least one electronic component 320. The at least one electronic component 320 may be disposed in the first housing 210 and/or the second housing 220. According to an embodiment, the at least one electronic component 320 may be disposed between the electromagnetic induction panel 310 and the second surface 212. Referring to FIG. 3B, when the electronic device 101 is in the folded state, a first region 303 and/or a second region 304 among the second portion 302 may be a region facing the at least one electronic component 320. For example, the at least one electronic component 320 may include a first electronic component 321 and/or a second electronic component 322 different from the first electronic component 321. The first region 303 may be a region facing the first electronic component 321 of the second portion 302 in the folded state. The second region 304 may be a region facing the second electronic component 322 of the second portion 302 in the folded state. The at least one electronic component 320 may be a component of the electronic device 101 for executing various functions of the electronic device 101. For example, the at least one electronic component 320 may include at least one of a camera, a speaker, and a motor, but is not limited thereto. For example, the processor 120 may be configured to identify a state of the electronic device 101 through a magnet in the electronic device 101.

According to an embodiment, the at least one electronic component 320 may include a ferromagnetic material. For example, the ferromagnetic material may include iron, cobalt, or nickel. The ferromagnetic material is a property that may be partially magnetized even in a state in which an external magnetic field is absent.

Referring to FIG. 3C, the at least one electronic component 320 may be operably coupled to the electromagnetic induction panel 310. According to an embodiment, when a distance between the at least one electronic component 320 disposed in the first housing 210 and the electromagnetic induction panel 310 disposed in the second housing 220 changes, a magnetic field formed by the at least one electronic component 320 may cause an induced current in the electromagnetic induction panel 310. The change in distance may cause a change in magnetic flux penetrating the electromagnetic induction panel 310. Based on the change in magnetic flux, the induced current may be formed in the electromagnetic induction panel 310. For example, the magnetic field formed by the at least one electronic component 320 may generate an eddy current in the electromagnetic induction panel 310.

The processor 120 may be operably coupled to the electromagnetic induction panel 310 and/or the memory 130. According to an embodiment, the processor 120 may load data stored in the memory 130. According to the change in the distance between the at least one electronic component 320 and the electromagnetic induction panel 310, the memory 130 may be configured to store first data obtained based on a current value induced in the electromagnetic induction panel 310 and load the first data. The first data may be referred to as reference data for identifying the state of the electronic device 101.

The processor 120 may identify the current value induced in the electromagnetic induction panel 310 and obtain second data related to the current value. The second data may mean data related to the current value induced in the electromagnetic induction panel 310 by the ferromagnetic material included in the at least one electronic component 320. The processor 120 may be configured to identify the state of the electronic device 101 by comparing the second data with the first data. For example, the first data may include a designated range related to the folded state and the unfolded state of the electronic device 101. Based on identifying that the obtained second data is included in the designated range of the first data, the processor 120 may be configured to identify a switch to the folded state or the unfolded state of the electronic device 101. Based on identifying that the obtained second data is not included in the range, the processor 120 may be configured to identify that the electronic device is maintained in the folded state or the unfolded state.

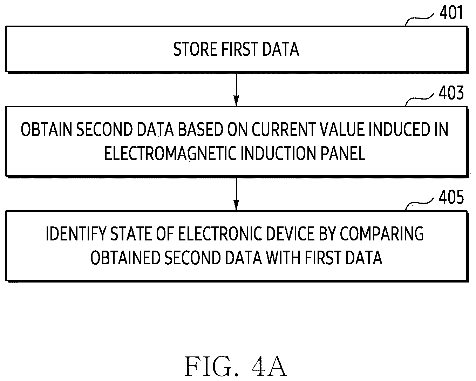

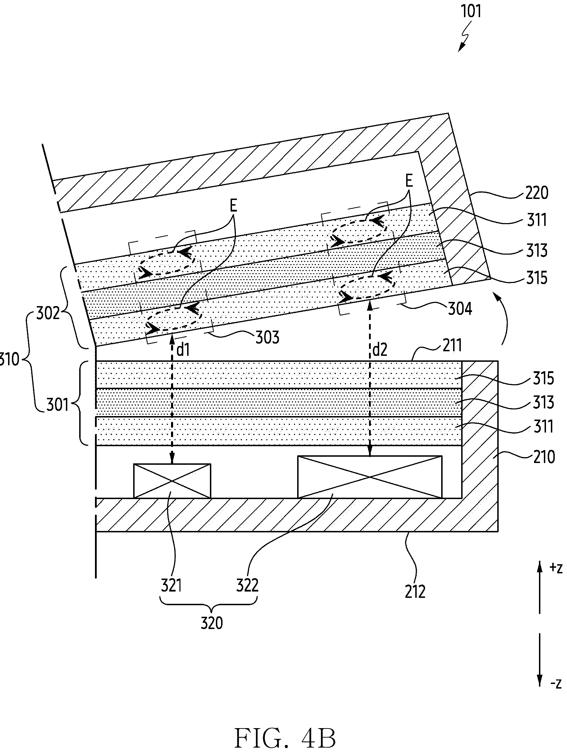

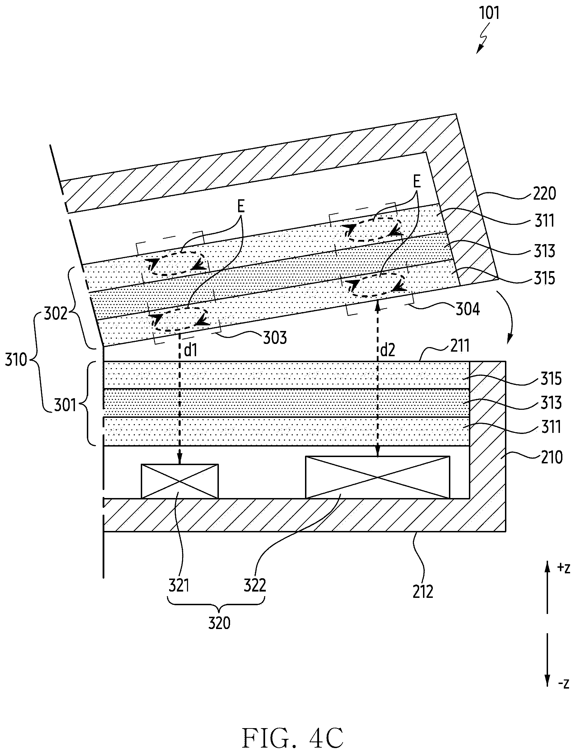

FIG. 4A is a flowchart illustrating an operation of identifying a state of an exemplary electronic device. FIG. 4B illustrates a posture in which an exemplary electronic device is switched from a folded state to an unfolded state. FIG. 4C illustrates a posture in which an exemplary electronic device is switched from an unfolded state to a folded state. FIGS. 4A and 4B illustrate an example of an electronic device 101 in which a display (e.g., the display 230 of FIG. 3A) is omitted.

Referring to FIG. 4A, in operation 401, a memory (e.g., the memory 130 of FIG. 3C) may be configured to store first data. The first data may be obtained based on a current value induced in an electromagnetic induction panel 310 according to a change in a distance between at least one electronic component 320 and the electromagnetic induction panel 310.

Referring to FIGS. 4B and 4C, the at least one electronic component 320 may be disposed in a first housing 210 and/or a second housing 220. According to an embodiment, the at least one electronic component 320 may be disposed between a second surface 212 and the electromagnetic induction panel 310. For example, the at least one electronic component 320 may be disposed between the second surface 212 and a first portion 301. FIGS. 4B and 4C illustrate that the at least one electronic component 320 is disposed in the first housing 210, in order to explain electromagnetic induction by the at least one electronic component 320, but are not limited thereto. For example, the at least one electronic component 320 may be disposed in the first housing 210 and/or the second housing 220.

According to an embodiment, the at least one electronic component 320 may include a first electronic component 321 and/or a second electronic component 322 different from the first electronic component 321. For example, the first electronic component 321 may include a speaker. The second electronic component 322 may include a camera. However, it is not limited thereto. The at least one electronic component 320 may be replaced with a magnet. For example, instead of the at least one electronic component 320, the magnet mounted in the electronic device 101 may operate the same as or similar to a ferromagnetic material of the at least one electronic component 320. The distance between the at least one electronic component 320 and the electromagnetic induction panel 310 may be the closest in the folded state. According to an embodiment, a first distance d1 between the first electronic component 321 and a first region 303 of the second portion 302 in a direction (e.g., +z direction) in which a first surface 211 faces, and a second distance d2 between the second electronic component 322 and a second region 304 of the second portion 302 in the direction (e.g., +z direction) in which the first surface 211 faces may be closest in the folded state.

According to an embodiment, when the electronic device 101 is switched from the folded state to the unfolded state, as the second housing 220 is rotated from the first housing 210, an angle between the first housing 210 and the second housing 220 may increase. For example, the angle may be a narrow angle (e.g., about 0 degrees to about 10 degrees) in the folded state. The angle may gradually increase according to rotation of the second housing 220. As the angle increases, the first distance d1 and the second distance d2 may increase.

According to an embodiment, when the electronic device 101 is switched from the unfolded state to the folded state, as the second housing 220 is rotated from the first housing 210, the angle between the first housing 210 and the second housing 220 may decrease. For example, the angle may form an angle of about 180 degrees in the unfolded state. The angle may gradually decrease according to rotation of the second housing 220. As the angle decreases, the first distance d1 and the second distance d2 may decrease. For example, when the angle gradually decreases from 90 degrees, the first distance d1 and the second distance d2 may gradually decrease.

According to an embodiment, when the second housing 220 is rotationally moved with respect to the first housing 210, a current may be induced in the second portion 302 according to a change in a distance between the at least one electronic component 320 and the second portion 302. When the first distance d1 and the second distance d2 increase or decrease, a change in magnetic flux by the at least one electronic component 320 penetrating the first region 303 and the second region 304 may occur. The change in the magnetic flux may cause an induced electromotive force by electromagnetic induction. The induced electromotive force may cause an induced current in the electromagnetic induction panel 310. For example, while the electronic device 101 changes to the unfolded state, an induced magnetic field penetrating the first region 303 or the second region 304 may be formed, by a decrease in magnetic flux that faces the first region 303 from the electronic component 321 or magnetic flux that penetrates the second region 304 from the electronic component 322. For example, in case that polarity facing the first region 303 of a ferromagnetic material in the electronic component 321 is the N pole, the magnetic flux that faces the first region 303 may decrease while the second housing 220 is unfolded with respect to the first housing 210. In case that polarity facing the second region 304 of a ferromagnetic material in the electronic component 322 is the N pole, the magnetic flux that faces the second region 303 may decrease while the second housing 220 is unfolded with respect to the first housing 210. According to the change in the magnetic flux, the induced magnetic field may be formed in a direction in which the magnetic flux faces from the first region 303 or the second region 304. The induced magnetic field may cause an eddy current E in a counterclockwise direction. While the electronic device 101 is changed to the folded state, the induced magnetic field penetrating the first region 303 or the second region 304 may be formed by an increase in the magnetic flux that faces the first region 303 from the electronic component 321 or the magnetic flux that faces the second region 304 from the electronic component 322. The induced magnetic field may cause an eddy current E in a clockwise direction.

According to an embodiment, the first data may be obtained from a current value of the induced current. According to an embodiment, when rotating the second housing 220 at different speeds, the first data may be referred to as data that normalized current values of an induced current induced in the second portion 302. In the above-described case, the first data may include a minimum value among current values of an induced current capable of being induced in the electromagnetic induction panel 310 when a state of the electronic device 101 is switched. A current value greater than or equal to the minimum value may mean a current value capable of identifying a state switch of the electronic device 101. A current value less than the minimum value may mean noise, not the current value of the induced current obtained according to the state switch of the electronic device 101. For example, the noise may mean an induced current temporarily formed by electromagnetic coupling between a component in the electronic device 101 and the electromagnetic induction panel 310. For example, the noise may mean an induced current temporarily formed by electromagnetic coupling between a magnetic field outside the electronic device 101 and the electromagnetic induction panel 310.

According to an embodiment, when rotating the second housing 220 repeatedly at a designated speed, the first data may be referred to as data that normalized the current values of the induced current induced in the second portion 302. The normalized data may be obtained in various ways while changing the designated speed. The first data may include a minimum value among current values capable of identifying the state switch of the electronic device 101, based on the obtained data. For example, the minimum value may be designated as a current value indicating a frequency less than a certain frequency (e.g., 1%) among the obtained data, but is not limited thereto.

According to an embodiment, the memory 130 may be configured to store the first data. A processor 120 may obtain the first data, which becomes a reference capable of identifying the state of the electronic device 101, from the memory 130. According to an embodiment, the operation 401 may be omitted. For example, the first data designated in advance may be stored in the memory 130 according to the component included in the electronic device 101 and an internal structure of the first housing 210 and the second housing 220. The memory 130 in which the first data is stored may be embedded in the electronic device 101. The processor 120 may be configured to use the first data stored in the memory 130.

In operation 403, the processor 120 may be configured to obtain the second data based on the current value induced in the electromagnetic induction panel 310. According to an embodiment, when the second housing 220 is rotationally moved with respect to the first housing 210, a current may be induced in the second portion 302 according to the change in the distance between the at least one electronic component 320 and the second portion 302. The processor 120 may be configured to identify a current value induced in the second portion 302, and obtain the second data based on the identified current value.

Referring to FIG. 4B, when the electronic device 101 is switched from the folded state to the unfolded state, the first distance d1 and the second distance d2 may increase. When the first distance d1 increases, magnetic flux by the first electronic component 321 penetrating the first region 303 may decrease. When the second distance d2 increases, magnetic flux by the second electronic component 322 penetrating the second region 304 may decrease. Due to the decrease in the magnetic flux passing through the first region 303 and the second region 304, an induced magnetic field penetrating the first region 303 and the second region 304 may be formed. The induced magnetic field may cause the eddy current E in the counterclockwise direction.

Referring to FIG. 4C, when the electronic device 101 is switched from the unfolded state to the folded state, the first distance d1 and the second distance d2 may decrease. When the first distance d1 decreases, the magnetic flux by the first electronic component 321 penetrating the first region 303 may increase. When the second distance d2 increases, the magnetic flux by the second electronic component 322 penetrating the second region 304 may increase. The induced magnetic field penetrating the first region 303 and the second region 304 may be formed by an increase in the magnetic flux penetrating the first region 303 and the second region 304. The induced magnetic field may cause the eddy current E in the clockwise direction.

According to an embodiment, the induced current may be formed in a third layer 315 of the electromagnetic induction panel 310. The first region 303 and the second region 304 may be positioned in the third layer 315. For example, the third layer 315 may include a conductive pattern forming at least one closed-loop. As the first distance d1 and the second distance d2 increase, the induced current may be formed in the conductive pattern. According to an embodiment, the processor 120 may be electrically connected to the third layer 315. The processor 120 may identify a current induced in the third layer 315. The processor 120 may be configured to obtain the second data based on the current.

According to an embodiment, the processor 120 may be configured to obtain the second data related to the current value induced in the electromagnetic induction panel 310. For example, the processor 120 may be configured to obtain the second data related to the current value induced in the second portion 302 according to the change in the distance between the at least one electronic component 320 and the second portion 302 in the direction (e.g., +z direction) in which the first surface 211 faces. According to an embodiment, the second data may be obtained, based on magnitude of the current and a direction of the current induced in the second portion 302 by the ferromagnetic material. For example, the magnitude of the current may be determined by magnitude of magnetism of the ferromagnetic material of the at least one electronic component 320 and/or a rotational speed of the first housing 210 and/or the second housing 220. For example, the direction of the current may be determined according to a rotation direction of the first housing 210 and/or the second housing 220 and/or a relative positional relationship between the at least one electronic component 320 and the electromagnetic induction panel 310. For example, the direction of the current may mean a rotation direction (e.g., clockwise or counterclockwise direction) of an eddy current E formed in the electromagnetic induction panel 310.

In operation 405, the processor 120 may be configured to identify the state of the electronic device 101 by comparing the obtained second data with the first data. According to an embodiment, the processor 120 may be configured to compare a current value indicated by the obtained second data with a minimum value included in the first data. The minimum value may mean a minimum value of the current value capable of identifying the state switch of the electronic device 101 among the current values of the induced current induced in the electromagnetic induction panel 310. For example, in the unfolded state, in case that the current value indicated by the second data is greater than or equal to the minimum value included in the first data, the processor 120 may identify that the state of the electronic device 101 is switched to the folded state. For example, in the unfolded state, in case that the current value indicated by the second data is less than the minimum value included in the first data, the processor 120 may identify that the state of the electronic device 101 is maintained in the unfolded state.

According to an embodiment, the first data may include a first range and a second range of current values induced in the second portion 302. The first range may mean a range of current values induced in the second portion 302 when the electronic device 101 is switched from the unfolded state to the folded state. The second range may mean a range of current values induced in the second portion 302 when the electronic device 101 is switched from the folded state to the unfolded state. The first range and the second range may normalize current values of an induced current induced in the second portion 302, and may be obtained based on the normalized current values. When the distance between the at least one electronic component 320 and the electromagnetic induction panel 310 increases, the direction of the eddy current E may be the counterclockwise direction. When the distance gets closer, the direction of the eddy current E may be the clockwise direction. According to an embodiment, the first range and the second range may have opposite signs to indicate opposite directions to each other. For example, in case that the first range has a + sign, the second range may have a - sign.

According to an embodiment, the processor 120 may be configured to identify a change in the state of the electronic device 101 by comparing the second data with the first range or the second range. According to an embodiment, the processor 120 may be configured to identify the state of the electronic device 101. For example, the electronic device 101 may include state detection circuitry (e.g., a proximity sensor) capable of identifying whether a current state of the electronic device 101 is which state from among the folded state, the unfolded state, or an intermediate state. The processor 120 may be configured to identify the current state of the electronic device 101 through the state detection circuitry.

According to an embodiment, the processor 120 may be configured to identify that the electronic device 101 is switched from the unfolded state to the folded state, based on identifying that the current value indicated by the second data is included in the first range when the electronic device 101 is in the unfolded state. According to an embodiment, the processor 120 may be configured to identify that the state of the electronic device 101 is maintained in the unfolded state, based on identifying that the current value indicated by the second data is outside the first range when the electronic device 101 is in the unfolded state. According to an embodiment, the processor 120 may be configured to identify that the electronic device 101 is switched from the folded state to the unfolded state, based on identifying that the current value indicated by the second data is included in the second range when the electronic device 101 is in the folded state. According to an embodiment, the processor 120 may be configured to identify that the state of the electronic device 101 is maintained in the folded state, based on identifying that the current value indicated by the second data is outside the second range when the electronic device 101 is in the folded state.

The exemplary electronic device 101 may identify the state of the electronic device 101 by using the at least one electronic component 320 disposed in the electronic device 101 without using a separate sensor (e.g., a hole sensor) for identifying the folded state and the unfolded state. The exemplary electronic device 101 may secure a mounting space for components disposed inside the electronic device 101 by identifying the state of the electronic device 101 using the at least one electronic component 320.

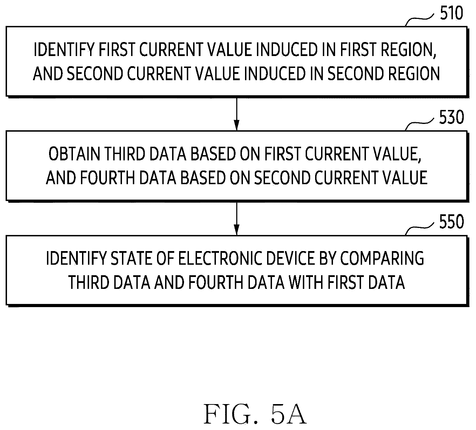

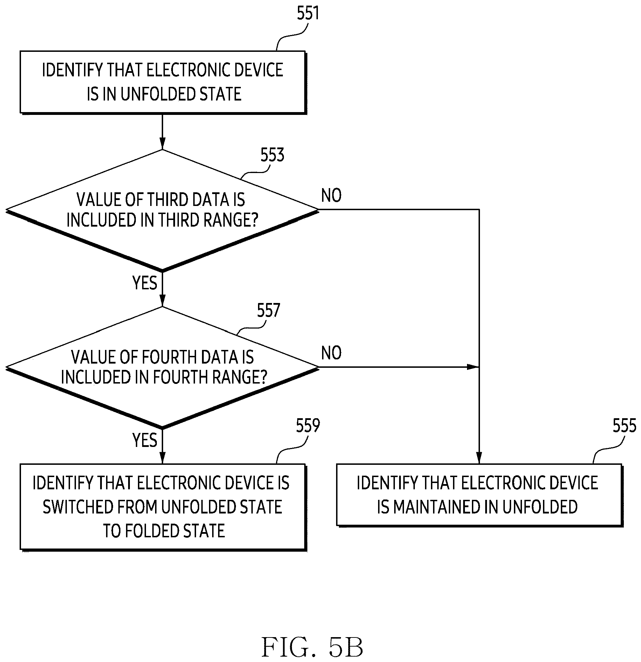

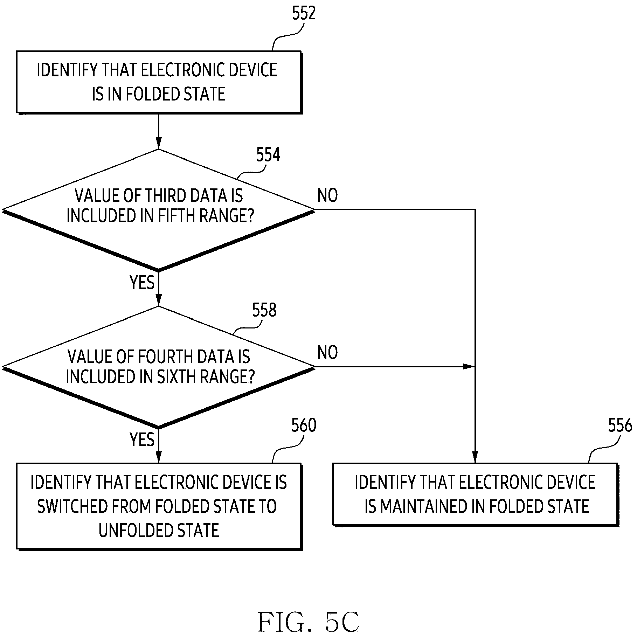

FIG. 5A is a flowchart illustrating an operation in which an exemplary electronic device identifies a state of the electronic device through at least one electronic component. FIG. 5B is a flowchart illustrating an operation in which an exemplary electronic device identifies a state of the electronic device in an unfolded state. FIG. 5C is a flowchart illustrating an operation in which an exemplary electronic device identifies a state of the electronic device in a folded state.

Referring to FIG. 5A, in operation 510, a processor 120 may be configured to identify a first current value induced in a first region 303, and a second current value induced in a second region 304. Referring to FIGS. 4B and 4C, at least one electronic component 320 may include a first electronic component 321 and a second electronic component 322 different from the first electronic component 321. The first electronic component 321 and the second electronic component 322 may be disposed in a first housing 210. For example, the first electronic component 321 and the second electronic component 322 may be disposed between a first portion 301 of an electromagnetic induction panel 310 and a second surface 212. The first region 303 may be a region facing the first electronic component 321 of a second portion 302 in the folded state. The second region 304 may be a region facing the second electronic component 322 of the second portion 302 in the folded state.

According to an embodiment, an induced current may be formed in the first region 303 according to a change in a first distance d1 between the first electronic component 321 and the second portion 302 in a direction (e.g., +z direction) in which a first surface 211 faces. The first current value may mean a current value induced in the first region 303 by a ferromagnetic material included in the first electronic component 321. According to an embodiment, an induced current may be formed in the second region 304 according to a change in a second distance d2 between the second electronic component 322 and the second portion 302 in the direction in which the first surface 211 faces. The second current value may mean a current value induced in the second region 304 by a ferromagnetic material included in the second electronic component 322. The processor 120 may be configured to identify the first current value and the second current value. According to an embodiment, when the first distance d1 increases, the second distance d2 may increase. When the first distance d1 decreases, the second distance d2 may decrease. The first current value and the second current value may have the same direction.

For example, the electromagnetic induction panel 310 may include a conductive pattern in which a current is applied for electromagnetic interaction with an external electronic device p. When the current is applied to the conductive pattern, the first electronic component 321 and the second electronic component 322 including the ferromagnetic material may be configured to form a magnetic field by an electromagnetic interaction with the electromagnetic induction panel 310. A magnetic field formed by the first electronic component 321 may cause an induced current in the conductive pattern included in the first region 303, based on the change in the first distance d1. A magnetic field formed by the second electronic component 322 may cause an induced current in the conductive pattern included in the second region 304, based on the change in the second distance d2. The processor 120 may be configured to identify the first current value induced in the first region 303 and the second current value induced in the second region 304.

In operation 530, the processor 120 may be configured to obtain third data based on the first current value, and fourth data based on the second current value. According to an embodiment, the third data may be obtained based on magnitude of a current and a direction of the current induced in the first region 303 by the ferromagnetic material included in the first electronic component 321. The fourth data may be obtained based on magnitude of a current and a direction of the current induced in the second region 304 by the ferromagnetic material included in the second electronic component 322.

For example, in case that the first housing 210 and a second housing 220 are able to being folded each other or being unfolded, a distance between the first electronic component 321 and the second electronic component 322 that are disposed in the first housing 210, and the second portion 302 of the electromagnetic induction panel 310 in the second housing 220 may increase or decrease. Since both the first electronic component 321 and the second electronic component 322 are disposed in the first housing 210, both the first distance d1 and the second distance d2 may increase or decrease during a rotational movement of the first housing 210 and/or the second housing 220. The first current value and the second current value may have the same sign. Magnitude of the first current value may be determined according to magnetism of the ferromagnetic material included in the first electronic component 321. Magnitude of the second current value may be determined according to magnetism of the ferromagnetic material included in the second electronic component 322. The processor 120 may be configured to obtain the third data indicating the first current value based on the first current value. The processor 120 may be configured to obtain the fourth data indicating the second current value, based on the second current value. The third data and the fourth data may include a coordinate of a portion corresponding to a position of the first region 303 and a coordinate of a portion corresponding to a position of the second region 304 from among the second portion 302 of the electromagnetic induction panel 310.

In operation 550, the processor 120 may be configured to identify a state of an electronic device 101 by comparing the third data and the fourth data with first data.

According to an embodiment, the first data may include a third range and a fourth range of current values for identifying that the electronic device 101 is switched from the unfolded state to the folded state. The third range may be a range of current values obtained based on the first current value when the electronic device 101 is switched from the unfolded state to the folded state. The fourth range may be a range of current values obtained based on the second current value when the electronic device 101 is switched from the unfolded state to the folded state. According to an embodiment, the first data may include a fifth range and a sixth range of current values for identifying that the electronic device 101 is switched from the folded state to the unfolded state. The fifth range may be a range of current values obtained based on the first current value when the electronic device 101 is switched from the folded state to the unfolded state. The sixth range may be a range of current values obtained based on the second current value when the electronic device 101 is switched from the folded state to the unfolded state. According to an embodiment, the processor 120 may be configured to identify that the electronic device 101 is switched from the unfolded state to the folded state, based on identifying that a value of the third data is included in the third range and a value of the fourth data is included in the fourth range, when the electronic device 101 is in the unfolded state. The processor 120 may be configured to identify that the electronic device 101 is maintained in the unfolded state, based on identifying that the value of the third data is not in the third range, or the value of the fourth data is not in the fourth range. The third range and the fourth range may be designated as a different range to each other. According to an embodiment, as magnetism of a ferromagnetic material gets greater, a current value of an induced current may be greater, and as the magnetism of the ferromagnetic material gets smaller, a current value of the induced current may be smaller. The third range may be designated based on the magnetism of the ferromagnetic material included in the first electronic component 321. The fourth range may be designated based on the magnetism of the ferromagnetic material included in the second electronic component 322. For example, in case that the magnetism of the ferromagnetic material included in the first electronic component 321 is greater than the magnetism of the ferromagnetic material included in the second electronic component 322, a minimum value of a first range may be greater than a minimum value of a second range.

According to an embodiment, the processor 120 may be configured to identify that the electronic device 101 is switched from the folded state to the unfolded state, in response to identifying that the value of the third data is included in the fifth range and the value of the fourth data is included in the sixth range, when the electronic device 101 is in the folded state. The processor 120 may be configured to identify that the electronic device 101 is maintained in the folded state, based on identifying that the value of the third data is not included in the fifth range, or the value of the fourth data is not included in the sixth range.

Hereinafter, the operation 550 may be described in detail with reference to FIGS. 5B and 5C.

Referring to FIG. 5B, in operation 551, the processor 120 may be configured to identify that the electronic device 101 is in the unfolded state. The operation 551 may not be performed as a separate operation, and the processor 120 may always identify the state of the electronic device 101. For example, the electronic device 101 may include state detection circuitry (not illustrated) capable of identifying whether a current state of the electronic device 101 is which state from among the folded state, the unfolded state, or an intermediate state. The processor 120 may be configured to identify the current state of the electronic device 101 through the state detection circuitry. For example, in case of receiving a signal indicating that the electronic device 101 is in the unfolded state from the detection circuitry, the processor 120 may be configured to identify the state of the electronic device 101 in the unfolded state until another signal is received.

In operation 553, the processor 120 may be configured to identify whether the obtained value of the third data is included in the third range of the first data.

According to an embodiment, the second housing 220 may by rotationally moved with respect to the first housing 210 in a direction of decreasing an angle between the first housing 210 and the second housing 220 in the unfolded state. By the rotational movement, the first distance d1 may decrease. According to the rotational movement, an induced current may be caused in the first region 303. According to an embodiment, the third range may be obtained by normalizing an induced first current value. For example, when the second housing 220 is rotated at different speeds, different first current values may be obtained. A plurality of first current values may be normalized. The third range may be a range greater than or equal to a minimum value among the normalized first current values. The minimum value may mean a minimum value of a first current value induced in the first region 303 when the state of the electronic device 101 is switched from the unfolded state to the folded state.

According to an embodiment, the processor 120 may compare the value of the third data with the first data. The processor 120 may be configured to identify whether the value of the third data is included in the third range. For example, the third data may indicate the first current value including the magnitude and the direction of the current induced in the first region 303. The value of the third data being included in the third range may mean that the first current value is greater than or equal to a minimum value of the third range.

In case that the processor 120 identifies that the value of the third data is not included in the third range in the operation 553, the processor 120 may perform operation 555. In the operation 555, the processor 120 may be configured to identify that the electronic device 101 is maintained in the unfolded state, based on identifying that the value of the third data is not included in the third range. The value of the third data being not included in the third range may mean that the first current value is less than the minimum value of the third range. For example, in case that an induced current is formed in the first region 303 by an external environmental factor, a current value of the induced current may be very small. In case that the first current value is not included in the third range, the processor 120 may be configured to identify that the electronic device 101 is not switched to the folded state and is maintained in the unfolded state.

In operation 557, the processor 120 may be configured to identify whether the obtained value of the fourth data is included in the fourth range of the first data. In FIG. 5B, although it is illustrated that the operation 557 is performed after the operation 553, the operation 553 and the operation 557 may be performed independently without being bound to the order. For example, the operation 553 and the operation 557 may be performed simultaneously, or the operation 553 may be performed after the operation 557 is performed first.

According to an embodiment, the second distance d2 may decrease by a rotational movement of the second housing 220 in the unfolded state. According to the rotational movement, an induced current may be caused in the second region 304. According to an embodiment, the fourth range may be obtained by normalizing an induced second current value. For example, when the second housing 220 is rotated at different speeds, different second current values may be obtained. A plurality of second current values may be normalized. The fourth range may be a range greater than or equal to a minimum value among the normalized second current values. The minimum value may mean a minimum value of the second current value induced in the second region 304 when the state of the electronic device 101 is changed from the unfolded state to the folded state.

According to an embodiment, the processor 120 may compare the value of the fourth data with the first data. The processor 120 may be configured to identify whether the value of the fourth data is included in the fourth range. For example, the fourth data may indicate the second current value including the magnitude and the direction of the current induced in the second region 304. The value of the fourth data being included in the fourth range may mean that the second current value is greater than or equal to a minimum value of the fourth range.

In case that the processor 120 identifies that the value of the fourth data is not included in the fourth range in the operation 557, the processor 120 may perform the operation 555. The processor 120 may be configured to identify that the electronic device 101 is maintained in the unfolded state, based on identifying that the value of the fourth data is not included in the fourth range in the operation 555. The value of the fourth data being not included in the fourth range may mean that the second current value is less than the minimum value of the fourth range. For example, in case that an induced current is formed in the second region 304 by an external environmental factor, a current value of the induced current may be very small. In case that the second current value is not included in the fourth range, the processor 120 may be configured to identify that the electronic device 101 is not switched to the folded state and is maintained in the unfolded state.

In operation 559, the processor 120 may be configured to identify that the electronic device 101 is switched from the unfolded state to the folded state, based on identifying that the value of the third data is included in the third range and the value of the fourth data is included in the fourth range. According to an embodiment, the processor 120 may be configured to identify that the state of the electronic device 101 is switched from the unfolded state to the folded state, through the first current value induced in the first region 303 and the second current value induced in the second region 304. According to an embodiment, the processor 120 may be configured to identify both the first current value induced in the first region 303 and the second current value induced in the second region 304. In case that the first current value and the second current value are included in a designated range, respectively, the processor 120 may be configured to identify that the electronic device 101 is switched from the unfolded state to the folded state. According to an embodiment, in case that a temporary induced current is formed in the first region 303 or the second region 304 by an external environmental factor, at least one of the first current value and the second current value may not be included in the designated range. According to an embodiment, since the processor 120 identifies the state of the electronic device 101 based on the third data and the fourth data, a state determination error by noise may decrease.

Referring to FIG. 5C, in operation 552, the processor 120 may be configured to identify that the electronic device 101 is in the folded state. The operation 552 may be referred to as the operation 551 of FIG. 5B.

In operation 554, the processor 120 may be configured to identify whether the obtained value of the third data is included in the fifth range of the first data.

According to an embodiment, the second housing 220 may rotationally move with respect to the first housing 210 in a direction of increasing the angle between the first housing 210 and the second housing 220 in the folded state. By the rotational movement, the second distance d2 may decrease. According to the rotational movement, an induced current may be caused in the first region 303. According to an embodiment, the fifth range may be obtained by normalizing an induced first current value. For example, when the second housing 220 is rotated at different speeds, different first current values may be obtained. A plurality of first current values may be normalized. The fifth range may be a range greater than or equal to a minimum value among the normalized first current values. The minimum value may mean a minimum value of the first current value induced in the first region 303 when the state of the electronic device 101 is switched from the folded state to the unfolded state.

According to an embodiment, the processor 120 may compare the value of the third data with the first data. The processor 120 may be configured to identify whether the value of the third data is included in the fifth range. For example, the third data may indicate the first current value including the magnitude and the direction of the current induced in the first region 303. The value of the third data being included in the fifth range may mean that the first current value is greater than or equal to a minimum value of the fifth range.

In case that the processor 120 identifies that the value of the third data is not included in the fifth range in the operation 554, the processor 120 may perform operation 556. In the operation 556, the processor 120 may be configured to identify that the electronic device 101 is maintained in the folded state, based on identifying that the value of the third data is not included in the fifth range. The value of the third data being not included in the fifth range may mean that the first current value is less than the minimum value of the fifth range. For example, in case that an induced current is formed in the first region 303 by an external environmental factor, a current value of the induced current may be very small. In case that the first current value is not included in the fifth range, the processor 120 may be configured to identify that the electronic device 101 is not switched to the unfolded state and is maintained in the folded state.

In operation 558, the processor 120 may be configured to identify whether the obtained value of the fourth data is included in the sixth range of the first data. In FIG. 5C, although it is illustrated that the operation 558 is performed after the operation 554, but the operation 554 and the operation 558 may be performed independently without being bound to the order. For example, the operation 554 and the operation 558 may be performed simultaneously, or the operation 554 may be performed after the operation 558 is performed first.

According to an embodiment, the second distance d2 may increase by the rotational movement of the second housing 220 in the folded state. According to the rotational movement, an induced current may be caused in the second region 304. According to an embodiment, the sixth range may be obtained by normalizing an induced second current value. For example, when the second housing 220 is rotated at different speeds, different second current values may be obtained. A plurality of second current values may be normalized. The sixth range may be a range greater than or equal to a minimum value among the normalized second current values. The minimum value may mean a minimum value of the second current value induced in the second region 304 when the state of the electronic device 101 is switched from the folded state to the unfolded state.

According to an embodiment, the processor 120 may compare the value of the fourth data with the first data. The processor 120 may be configured to identify whether the value of the fourth data is included in the sixth range. For example, the fourth data may indicate the second current value including the magnitude and the direction of the current induced in the second region 304. The value of the fourth data being included in the sixth range may mean that the second current value is greater than or equal to a minimum value of the sixth range.

In operation 558, in case that the processor 120 identifies that the value of the fourth data is not included in the sixth range, the processor 120 may perform the operation 556. In the operation 556, the processor 120 may be configured to identify that the electronic device 101 is maintained in the folded state, based on identifying that the value of the fourth data is not included in the sixth range. The value of the fourth data being not included in the sixth range may mean that the second current value is less than the minimum value of the sixth range. For example, in case that an induced current is formed in the second region 304 by an external environmental factor, a current value of the induced current may be very small. In case that the second current value is not included in the sixth range, the processor 120 may be configured to identify that the electronic device 101 is not switched to the unfolded state and is maintained in the folded state.

In operation 560, the processor 120 may be configured to identify that the electronic device 101 is switched from the folded state to the unfolded state, based on identifying that the value of the third data is included in the fifth range and the value of the fourth data is included in the sixth range. According to an embodiment, the processor 120 may be configured to identify that the state of the electronic device 101 is changed from the folded state to the unfolded state, through the first current value induced in the first region 303 and the second current value induced in the second region 304. According to an embodiment, the processor 120 may be configured to identify both the first current value induced in the first region 303 and the second current value induced in the second region 304. In case that the first current value and the second current value are included in a designated range, respectively, the processor 120 may be configured to identify that the electronic device 101 is switched from the folded state to the unfolded state. According to an embodiment, in case that a temporary induced current is formed in the first region 303 or the second region 304 by an external environmental factor, at least one of the first current value and the second current value may not be included in the designated range. By identifying that the state of the electronic device 101 is maintained through the third data and the fourth data, the processor 120 may decrease/prevent a state determination error by noise.

In the above description, the at least one electronic component 320 has been described as including the first electronic component 321 and the second electronic component 322, but at least, the number of electronic components is not limited. The exemplary electronic device 101 may include two or more electronic components. For example, the at least one electronic component 320 may include the first electronic component 321, the second electronic component 322, and a third electronic component (not illustrated) that are different from each other. The processor 120 may be configured to identify induced current values formed by each of the first electronic component 321, the second electronic component 322, and the third electronic component. The processor 120 may be configured to identify the state of electronic device 101, based on the identified induced current values. For example, the processor 120 may be configured to identify the state of the electronic device 101 by obtaining data related to the first electronic component 321, the second electronic component 322, and the third electronic component, and comparing a value of the data with reference data.

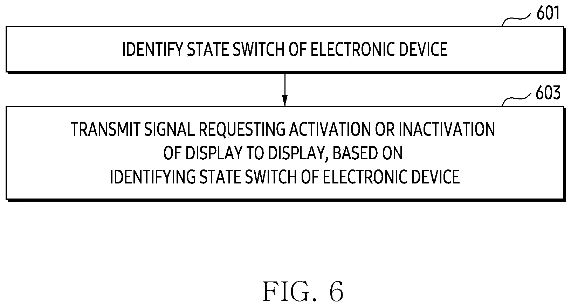

FIG. 6 is a flowchart illustrating an operation in which an exemplary electronic device controls a display based on a state of the electronic device.

Referring to FIG. 6, in operation 601, a processor (e.g., the processor 120 of FIG. 3C) may be configured to identify a state switch of an electronic device (e.g., the electronic device 101 of FIG. 3A) based on second data. According to an embodiment, the processor 120 may be configured to identify an induced current induced in an electromagnetic induction panel (e.g., the electromagnetic induction panel 310 of FIG. 3A) by at least one electronic component (e.g., the at least one electronic component 320 of FIG. 3A). The processor 120 may be configured to identify the state switch of the electronic device 101 based on an induced current value. The operation 601 may be referred to as the operation 405 of FIG. 4A.

In operation 603, the processor 120 may be configured to transmit a signal requesting activation or inactivation of a display 230 to the display (e.g., the display 230 of FIG. 3A), based on identifying the state switch of the electronic device 101. The processor 120 may be configured to adjust a state of the display 230 according to a state of the electronic device 101.

According to an embodiment, the display 230 may include a plurality of layers stacked in order. For example, the plurality of layers may include a thin film transistor (TFT) and a light emitting layer including a plurality of pixels controlled by the TFT. The plurality of pixels included in the light emitting layer may emit light toward a surface of the display 230, based on a current or voltage supplied from the TFT. According to an embodiment, the display 230 may be electrically connected to a display driving integrated circuit (DDI) that controls an operation of the plurality of layers. The display driving integrated circuit may be operably coupled with the processor 120.

According to an embodiment, the processor 120 may be configured to generate a first signal requesting inactivation of the display 230 in response to identifying that the electronic device 101 is switched from an unfolded state to a folded state. The processor 120 may transmit the generated first signal to the display driving integrated circuit. According to an embodiment, the processor 120 may request the first signal for switching the display 230 from an active state to an inactive state to be transmitted directly to the display driving integrated circuit, or to be transmitted to the display driving integrated circuit through an electronic component or a power management module (e.g., the power management module 188 of FIG. 1).

According to an embodiment, the display driving integrated circuit may switch the display 230 from the active state to the inactive state in response to receiving the first signal. The active state may mean a mode in which visual information is displayed through a display region of the display 230 by providing a steady state power to the display 230. The inactive state corresponds to a state in which lower power is supplied to the display 230, or a turn-off state in which a power supply to the display 230 is blocked. According to an embodiment, the display 230 may be inactivated based on the first signal. The display 230 may display a black image on the display region, or may not display visual information, in the inactivation state.

According to an embodiment, the processor 120 may be configured to generate a second signal requesting the activation of the display 230 in response to identifying that the electronic device 101 is switched from the folded state to the unfolded state. The processor 120 may transmit the generated second signal to the display driving integrated circuit. According to an embodiment, the processor 120 may request the second signal for switching the display 230 from the inactive state to the active state to be transmitted directly to the display driving integrated circuit, or to be transmitted to the display driving integrated circuit through the electronic component or the power management module (e.g., the power management module 188 of FIG. 1). According to an embodiment, the display driving integrated circuit may switch the display 230 from the inactive state to the active state in response to receiving the second signal. According to an embodiment, the display 230 may be activated based on the second signal. The display 230 may display visual information on the display region, in the activation state.

Referring to FIG. 3B, when the electronic device 101 is in the folded state, the display 230 may not be exposed to the outside. A first display region 231 and a second display region 232 of the display 230 may face each other. Since visual information displayed on the display 230 is invisible to a user in the folded state, the processor 120 may inactivate the display 230, based on identifying the folded state of the electronic device 101. Referring to FIG. 3A, when the electronic device 101 is in the unfolded state, the display 230 may be exposed to the outside. The first display region (e.g., the first display region 231 of FIG. 3A) and the second display region (e.g., the second display region 232 of FIG. 3A) of the display 230 may face the same direction (e.g., the +z direction of FIG. 3A). Since the user may visually recognize visual information displayed on the display 230 in the unfolded state, the processor 120 may activate the display 230, based on identifying the unfolded state of the electronic device 101. The exemplary electronic device 101 may activate the display 230, so that visual information is displayed on the display 230 exposed to the outside in the unfolded state. The exemplary electronic device 101 may inactivate the display 230, so that visual information is not displayed on the display 230 that is not exposed to the outside in the folded state. The exemplary electronic device 101 may reduce power consumption by adjusting the activation and the inactivation of the display 230 according to the state of the electronic device 101.

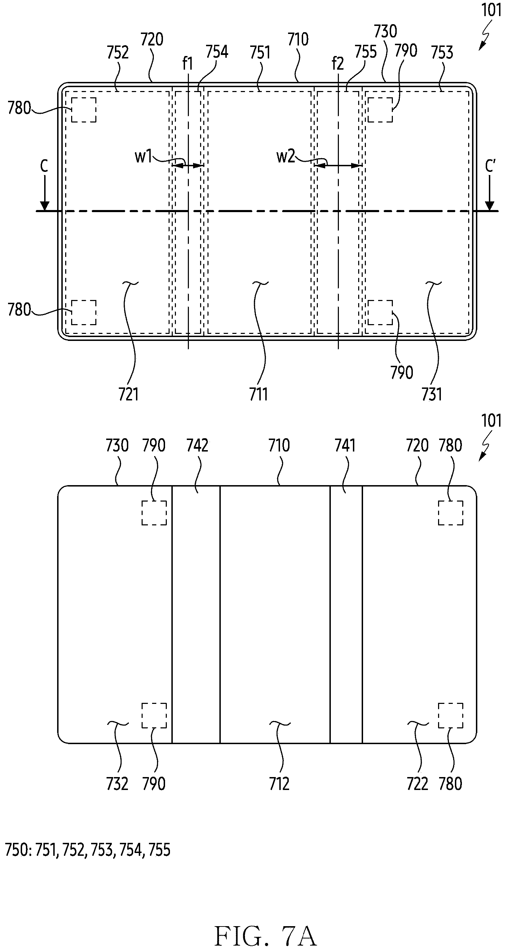

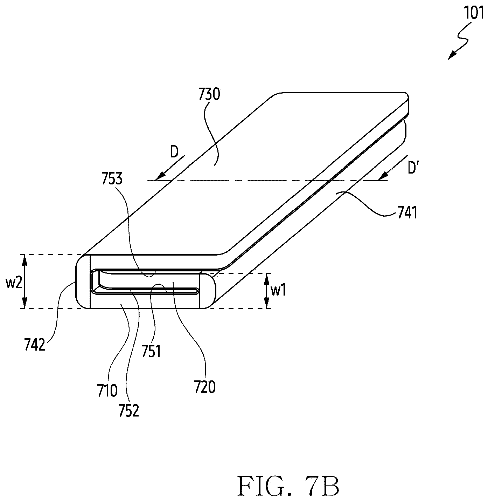

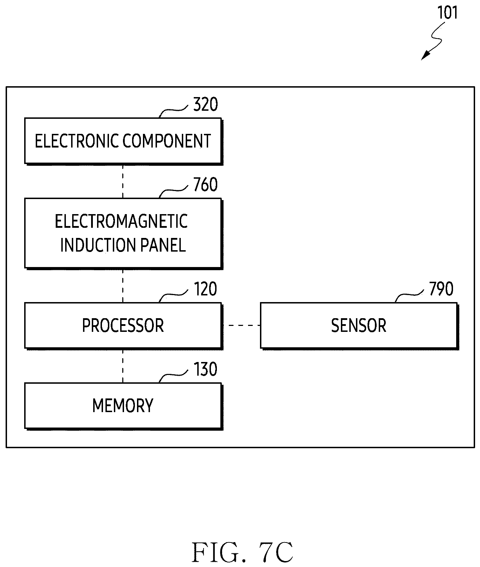

FIG. 7A illustrates an unfolded state of an exemplary electronic device. FIG. 7B illustrates a folded state of an exemplary electronic device. FIG. 7C is a block diagram of an exemplary electronic device. The descriptions of the components described with reference to FIGS. 4A, 5A, 5B, 5C, and 6 may be equally applied to an electronic device 101 illustrated in FIGS. 7A, 7B, and 7C.

Referring to FIGS. 7A, 7B, and 7C, the exemplary electronic device 101 may include a first housing 710, a second housing 720, a third housing 730, a first hinge structure 741, a second hinge structure 742, a display 750, an electromagnetic induction panel 760, at least one electronic component 320, at least one magnet 780, at least one sensor 790, a processor 120, and a memory 130. The exemplary electronic device 101 may be referred to as a multi-foldable electronic device 101 that may be folded or unfolded two or more times.

According to an embodiment, the first housing 710 may include a first surface 711 and a second surface 712 opposite the first surface 711. According to an embodiment, the second housing 720 may include a third surface 721 and a fourth surface 722 opposite to the third surface 721. According to an embodiment, the third housing 730 may include a fifth surface 731 and a sixth surface 732 opposite to the fifth surface 731.

According to an embodiment, the first hinge structure 741 may rotatably connect the first housing 710 and the second housing 720 to each other. According to an embodiment, the first hinge structure 741 may switch the electronic device 101 to a first unfolded state in which a direction in which the first surface 711 faces and a direction in which the third surface 721 faces are the same, or a first folded state in which the first surface 711 and the third surface 721 face. The first housing 710 and the second housing 720 may be rotatably connected to each other with respect to a first folding axis f1. The first unfolded state and the first folded state may be distinguished based on the first housing 710 and the second housing 720.

According to an embodiment, the second hinge structure 742 may rotatably connect the first housing 710 and the third housing 730 to each other. According to an embodiment, the second hinge structure 742 may switch the electronic device 101 to a second unfolded state in which the direction in which the first surface 711 faces and a direction in which the fifth surface 731 faces are the same, or a second folded state in which the first surface 711 and the fifth surface 731 face. The first housing 710 and the third housing 730 may be rotatably connected to each other with respect to a second folding axis f2. The second unfolded state and the second folded state may be distinguished based on the first housing 710 and the third housing 730. According to an embodiment, the first housing 710 may be disposed between the second housing 720 and the third housing 730.

According to an embodiment, the display 750 may be disposed above the first surface 711, the third surface 721, and the fifth surface 731 across the first hinge structure 741 and the second hinge structure 742. According to an embodiment, a region contacting the first hinge structure 741 and a region contacting the second hinge structure 742 of the display 750 may be a flexible folding region. According to an embodiment, the display 750 may include a first display region 751 disposed on the first housing 710, a second display region 752 disposed on the second housing 720, and a third display region 753 disposed on the third housing 730. According to an embodiment, a first folding region 754 contacting the first hinge structure 741 may be disposed between the first display region 751 and the second display region 752. According to an embodiment, the first folding region 754 may be disposed on a first hinge cover. As the first housing 710 and the second housing 720 rotate with respect to the first folding axis f1, the first folding region 754 may be deformed. For example, at least a portion of the first folding region 754 may be bent in the first folded state. In the first unfolded state, the first folding region 754 may form a substantially flat surface. According to an embodiment, a second folding region 755 contacting the second hinge structure 742 may be disposed between the first display region 751 and the third display region 753. According to an embodiment, the second folding region 755 may be disposed on a second hinge cover. As the first housing 710 and the third housing 730 rotate with respect to the second folding axis f2, the second folding region 755 may be deformed. For example, at least a portion of the second folding region 755 may be bent in the second folded state. In the second unfolded state, the second folding region 755 may form a substantially flat surface.

Referring to FIGS. 7A and 7B, the first housing 710 and the second housing 720 may operate in a first folding method (e.g., an in-folding method) through the first hinge structure 741. For example, in the first folded state, the first display region 751 and the second display region 752 may face each other. The first housing 710 and the third housing 730 may operate in the first folding method (e.g., the in-folding method) through the second hinge structure 742. For example, in the second folded state, the first display region 751 and the third display region 753 may face each other. However, a folding operation and an unfolding operation of the exemplary electronic device 101 are not limited to the above-described description. For example, the first housing 710 and the second housing 720 may operate in a second folding method (e.g., an out-folding method) through the first hinge structure 741. For example, in the first folded state, the first display region 751 and the second display region 752 may face opposite directions to each other. In addition to this, various folding methods may be possible.

According to an embodiment, the extent of the second folding region 755 may be wider than the extent of the first folding region 754. A second width w2, which is a width of the second folding region 755, may be shorter than a first width w1, which is a width of the first folding region 754. When the electronic device 101 is in the first folded state and the second folded state, a radius of curvature of the second folding region 755 may be greater than a radius of curvature of the second folding region 755.

According to an embodiment, the electromagnetic induction panel 760 may include a first portion 760a, a second portion 760b, and a third portion 760c. The first portion 760a may be disposed between the second surface 712 and the display 750. The second portion 760b may be disposed between the fourth surface 722 and the display 750. The third portion 760c may be disposed between the sixth surface and the display 750.

According to an embodiment, the at least one electronic component 320 may be disposed in the first housing 710. The at least one electronic component 320 may be disposed between the electromagnetic induction panel 760 and the second surface 712. The at least one electronic component 320 may include a ferromagnetic material. The at least one electronic component 320 may include at least one of a camera, a speaker, and a motor, but is not limited thereto.

According to an embodiment, the at least one magnet 780 may be disposed in the second housing 720. For example, the at least one magnet 780 may be adjacent to a lateral surface opposite to a lateral surface contacting the first hinge structure 741, from among lateral surfaces of the second housing 720. The at least one magnet 780 may at least partially overlap with an inactive region disposed along a periphery of the second display region 752 when the display 520 is viewed from above. The at least one magnet 780 may be adjacent to the second hinge structure 742 when the second housing 720 rotates and folds along the first folding axis f1.

According to an embodiment, the at least one sensor 790 may be disposed in the third housing 730. The at least one sensor 790 may detect magnetic force of the at least one magnet 780 in the second housing 720. The at least one sensor 790 may obtain third data related to a distance between the second housing 720 and the third housing 730, by detecting the magnetic force of the at least one magnet 780. The processor 120 may be configured to identify the second folded state or the second unfolded state, based on the third data related to the distance. Although it is described that the at least one magnet 780 is disposed in the second housing 720, and the at least one sensor 790 is disposed in the third housing 730, but is not limited thereto. For example, the at least one magnet 780 may be disposed in the third housing 730, and the at least one sensor 790 may be disposed in the second housing 720. For example, the at least one magnet 780 may be disposed in the second housing 720 and the third housing 730, respectively, and the at least one sensor 790 may be disposed in the second housing 720 and the third housing 730, respectively.

Referring to FIG. 7C, the processor 120 may be operably coupled to the electromagnetic induction panel 760, the memory 130, and the sensor 790. According to an embodiment, the memory 130 may be configured to store first data obtained based on a current value induced in the electromagnetic induction panel 760, according to a change in a distance between the at least one electronic component 320 and the electromagnetic induction panel 760. The first data may be referred to as reference data for identifying a state of the electronic device 101. The processor 120 may identify a current value induced in the electromagnetic induction panel 760, and obtain second data on the current value. The second data may mean data related to the current value induced in the electromagnetic induction panel 760 by the ferromagnetic material included in the at least one electronic component 320. The processor 120 may be configured to identify the first folded state or the first unfolded state of the electronic device 101 by comparing the second data with the first data. According to an embodiment, the processor 120 may be configured to identify the second folded state or the second unfolded state, based on third data, which is detected through the at least one sensor 790, related to a change in magnetic force according to a change in a distance between the at least one sensor 790 and the at least one magnet 780.

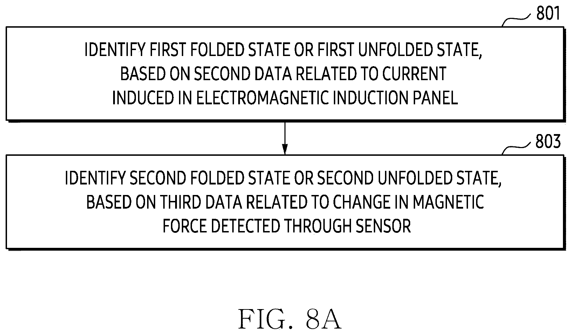

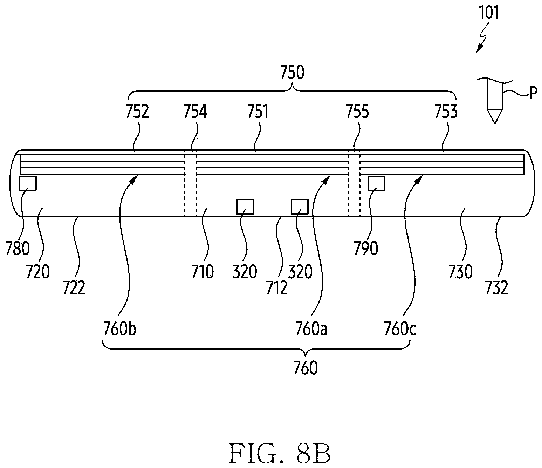

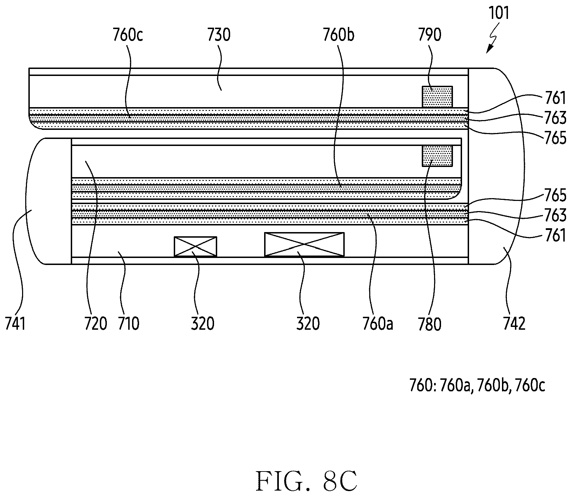

FIG. 8A is a flowchart illustrating an operation in which an exemplary electronic device identifies a state of the electronic device. FIG. 8B is a cross-sectional view of an exemplary electronic device cut along line C-C' of FIG. 7A. FIG. 8C is a cross-sectional view of an exemplary electronic device cut along line D-D' of FIG. 7B.

Referring to FIG. 8A, in operation 801, a processor 120 may be configured to identify a first folded state or a first unfolded state, based on second data related to a current induced in an electromagnetic induction panel 760.

Referring to FIGS. 8B and 8C, at least one electronic component 320 may be disposed in a first housing 710. For example, the at least one electronic component 320 may be disposed between the electromagnetic induction panel 760 and a second surface 712. The at least one electronic component 320 may face a second portion 760b in the first folded state. When a distance between the at least one electronic component 320 and the second portion 760b is changed, an induced current may be induced in the second portion 760b. As a second housing 720 is rotationally moved with respect to the first housing 710, the distance between the at least one electronic component 320 and the second portion 760b may be changed. For example, when the electronic device 101 is switched from the first folded state to the first unfolded state, the distance may increase. For example, when the electronic device 101 is switched from the first unfolded state to the first folded state, the distance may decrease. The change in the distance may cause a change in magnetic flux penetrating the electromagnetic induction panel 760. Based on the change in the magnetic flux, the induced current may be formed in the electromagnetic induction panel 760. For example, a magnetic field formed by the at least one electronic component 320 may generate an eddy current in the electromagnetic induction panel 760.

Referring to FIG. 8C, according to an embodiment, the electromagnetic induction panel 760 may include a first layer 761, a second layer 763, and a third layer 765. The first layer 761 may include a conductive material to block an electromagnetic wave generated from the inside of the electronic device 101. The second layer 763 may shield an electromagnetic wave transmitted into the electronic device 101. For example, the second layer 763 may shield an electromagnetic wave transmitted from an external electronic device p. For example, the second layer 763 may shield an electromagnetic wave from a conductive pattern of the third layer 765. According to an embodiment, the second layer 763 may be disposed on the first layer 761. For example, the second layer 763 may include a magnetic metal powder (MMP). The magnetic metal powder may include, for example, at least one selected from among iron, aluminum, nickel, silicon, or a combination thereof. The third layer 765 may include a conductive pattern forming at least one closed-loop. The conductive pattern may be configured to generate an electromagnetic wave transmitted to the external electronic device p or to receive an electromagnetic wave from the external electronic device p. The third layer 765 may be disposed on the second layer 763.

According to an embodiment, the processor 120 may identify the current value induced in the electromagnetic induction panel 760, and obtain second data related to the current value. According to an embodiment, the processor 120 may be electrically connected to the third layer 765. The processor 120 may identify a current induced in the third layer 765, and may be configured to obtain second data based on the current. The second data may mean data related to the current value induced in the electromagnetic induction panel 760 by a ferromagnetic material included in the at least one electronic component 320. The processor 120 may be configured to identify a state of the electronic device 101 by comparing the second data with first data. According to an embodiment, the processor 120 may be configured to compare a current value indicated by the obtained second data with a minimum value included in the first data. The minimum value may mean a minimum value of a current value capable of identifying a state switch of the electronic device 101 among current values of the induced current induced in the electromagnetic induction panel 760. For example, in case that the current value indicated by the second data is greater than or equal to the minimum value included in the first data in the first unfolded state, the processor 120 may identify that the state of the electronic device 101 is switched to the first folded state. For example, in case that the current value indicated by the second data is less than the minimum value included in the first data in the first unfolded state, the processor 120 may identify that the state of the electronic device 101 is maintained in the first unfolded state. The operation 801 may be referred to as the operation 401 and the operation 403 of FIG. 4A. The exemplary electronic device 101 may identify the state of the electronic device 101 using the at least one electronic component 320.

In operation 803, the processor 120 may be configured to identify a second folded state or a second unfolded state, based on third data related to a change in magnetic force according to a change in a distance between at least one sensor 790 and at least one magnet 780, detected through the sensor 790.

Referring to FIG. 8B, the at least one magnet 780 may be disposed in the second housing 720, and the at least one sensor 790 may be disposed in a third housing 730. For example, the at least one magnet 780 may be adjacent to a lateral surface opposite to a lateral surface contacting a first hinge structure 741, from among lateral surfaces of the second housing 720. The at least one sensor 790 may be adjacent to a lateral surface opposite to a lateral surface contacting a second hinge structure 742, from among lateral surfaces of the third housing 730. Referring to FIG. 8C, the at least one sensor 790 may face the at least one magnet 780 in the first unfolded state and the second unfolded state. A fourth surface 722 may face the third housing 730 in the first unfolded state and the second unfolded state.

According to an embodiment, the at least one sensor 790 may include a hole sensor. The at least one sensor 790 may be configured to detect magnetic force of the at least one magnet 780. According to an embodiment, the at least one sensor 790 may be configured to identify the second unfolded state or the second folded state, based on a change in a magnetic field formed by the at least one magnet 780 disposed in the second housing 720. Although it is described that the at least one magnet 780 is disposed in the second housing 720, and the at least one sensor 790 is disposed in the third housing 730, but is not limited thereto. For example, the at least one magnet 780 may be disposed in the third housing 730, and the at least one sensor 790 may be disposed in the second housing 720. For example, the at least one magnet 780 may be disposed in the second housing 720 and the third housing 730, respectively, and the at least one sensor 790 may be disposed in the second housing 720 and the third housing 730, respectively.

According to an embodiment, the processor 120 may be configured to obtain third data related to the distance between the at least one magnet 780 and the at least one sensor 790, through the at least one sensor 790. According to an embodiment, the sensor 790 may generate data related to the distance between the at least one magnet 780 and the at least one sensor 790. For example, the at least one sensor 790 may detect a change in magnetic force of the magnetic field and/or a change in a direction of the magnetic field formed by the at least one magnet 780 according to a movement of the second housing 720. The sensor 790 may generate third data related to the change in the magnetic force and/or the change in the direction of the magnetic field. The processor 120 may receive the third data generated from the at least one sensor 790.

According to an embodiment, the processor 120 may identify the state of the electronic device 101 based on the third data. According to an embodiment, the processor 120 may compare the third data received from the at least one sensor 790 with reference data corresponding to the second unfolded state, the second folded state, or an intermediate state between the second unfolded state and the second folded state. For example, in case that a value of the third data is included in a range of the reference data corresponding to the second folded state, the processor 120 may identify that the state of the electronic device 101 is in the second folded state. For example, in case that the value of the third data is included in a range of the reference data corresponding to the second unfolded state, the processor 120 may identify the state of the electronic device 101 is in the second unfolded state. A distance between the at least one magnet 780 disposed in the second housing 720 and the at least one sensor 790 disposed in the third housing 730 in the second folded state may be shorter than a distance between the at least one magnet 780 disposed in the second housing 720 and the at least one sensor 790 disposed in the third housing 730 in the second unfolded state. When the distance is short, magnitude of the magnetic force detected through the at least one sensor 790 may be large. According to an embodiment, the range of the reference data corresponding to the second folded state may be greater than the range of the reference data corresponding to the second unfolded state. According to an embodiment, a range of the reference data corresponding to the intermediate state between the second folded state and the second unfolded state may be a range between the range of the reference data corresponding to the second folded state and the range of the reference data corresponding to the second unfolded state.

In FIG. 8A, although it is illustrated that the operation 803 is performed after the operation 801, but the operation 801 and the operation 803 may be performed independently without being bound to the order.

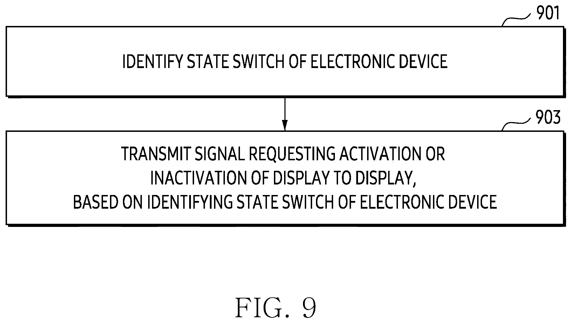

FIG. 9 is a flowchart illustrating an operation in which an exemplary electronic device controls a display based on a state of the electronic device.

Referring to FIG. 9, in operation 901, a processor (e.g., the processor 120 of FIG. 7C) may be configured to identify a state switch of an electronic device (e.g., the electronic device 101 of FIG. 7A). According to an embodiment, the processor 120 may be configured to identify an induced current induced in an electromagnetic induction panel (e.g., the electromagnetic induction panel 760 of FIG. 8B), by at least one electronic component (e.g., the at least one electronic component 320 of FIG. 8B). The processor 120 may be configured to identify a switch from a first folded state to a first unfolded state or a switch from the first unfolded state to the first folded state of the electronic device 101, based on second data related to an induced current value. According to an embodiment, the processor 120 may be configured to identify a change in magnetic force according to a change in a distance between a sensor (e.g., the sensor 790 of FIG. 8C) and a magnet (e.g., the magnet 780 of FIG. 8C) through the sensor 790. The processor 120 may be configured to identify a switch from a second folded state to a second unfolded state or a switch from the second unfolded state to the second folded state of the electronic device 101, based on third data related to the change in the magnetic force. The operation 901 may be referred to as the operation 801 and the operation 803 of FIG. 8A.

In operation 903, the processor 120 may be configured to transmit a signal requesting activation or inactivation of a display 750 (e.g., a display driving integrated circuit) to the display 750, based on identifying the state switch of the electronic device 101.

According to an embodiment, the processor 120 may be configured to generate a signal requesting inactivation of at least a portion of the display 750 in response to identifying that the electronic device 101 is switched from the first unfolded state to the first folded state. For example, in response to identifying that the electronic device 101 is switched from the first unfolded state to the first folded state, a first signal requesting inactivation of a first display region (e.g., the first display region 751 of FIG. 7A) and a second display region (e.g., the second display region 752 of FIG. 7A) may be generated. According to an embodiment, the processor 120 may transmit the first signal to the display 750. The display 750 may inactivate the first display region 751 and the second display region 752 in response to receiving the first signal.

According to an embodiment, the processor 120 may be configured to generate a signal requesting activation of the at least a portion of the display 750 in response to identifying that the electronic device 101 is switched from the first folded state to the first unfolded state. For example, in response to identifying that the electronic device 101 is switched from the first folded state to the first unfolded state, a second signal requesting activation of the first display region 751 and the second display region 752 may be generated. According to an embodiment, the processor 120 may transmit the second signal to the display 750. The display 750 may activate the first display region 751 and the second display region 752 in response to receiving the second signal.

According to an embodiment, the processor 120 may be configured to generate a signal requesting inactivation of the at least a portion of the display 750 in response to identifying that the electronic device 101 is switched from the second unfolded state to the second folded state. For example, in the first folded state, the processor 120 may generate a third signal requesting inactivation of the first display region 751 and a third display region (e.g., the third display region 753 of FIG. 7A) in response to identifying that the electronic device 101 is switched from the second unfolded state to the second folded state. According to an embodiment, the processor 120 may transmit the third signal to the display 750 (e.g., the display driving integrated circuit). The display 750 may inactivate the first display region 751 and the third display region 753 in response to receiving the third signal.

According to an embodiment, in the first folded state, the processor 120 may be configured to generate a signal requesting activation of the at least a portion of the display 750 in response to identifying that the electronic device 101 is switched from the second folded state to the second unfolded state. For example, in response to identifying that the electronic device 101 is switched from the second folded state to the second unfolded state, a fourth signal requesting activation of the first display region 751 and the third display region 753 may be generated. According to an embodiment, the processor 120 may transmit the fourth signal to the display 750. The display 750 may activate the first display region 751 and the third display region 753 in response to receiving the fourth signal.

According to an embodiment, in the first unfolded state, the processor 120 may be configured to provide a notification signal to a user in response to identifying that the electronic device 101 is switched from the second unfolded state to the second folded state. According to an embodiment, in the first unfolded state, the processor 120 may be configured to provide a notification signal to inform the user that a second housing 720 is in an unfolded state, in a case of identifying that a third housing 730 is folded with respect to a first housing 710. For example, the notification signal may be a visual signal, an auditory signal, and/or a tactile signal.

The exemplary electronic device 101 may not display visual information on the display 750 that is not exposed to the outside, by activating or inactivating a display region of the display 750, based on a state of the electronic device 101. The exemplary electronic device 101 may reduce power consumption by not displaying unnecessary visual information.

The descriptions described with reference to FIGS. 8A and 9 are not limited to the electronic device 101 illustrated in FIGS. 8B and 8C, and may be applied in the same or similar manner to an electronic device of a structure that is folded and/or unfolded two times or more. For example, a first housing (e.g., the first housing 710 of FIG. 7A) and a third housing (e.g., the third housing 730 of FIG. 7A) may be operated in a second folding method (e.g., an out-folding method), through a second hinge structure (e.g., the second hinge structure 742 of FIG. 7A). The electronic device 101 of the above-described structure may identify the second folded state and the second unfolded state through at least one magnet (e.g., the at least one magnet 780 of FIG. 7A) and at least one sensor (e.g., the at least one sensor 790 of FIG. 7A). The electronic device 101 may activate or inactivate the display region of the display 750 based on a folded state or an unfolded state of the first housing 710 and the third housing 730.

An embodiment of the present disclosure aims to identify a state of an electronic device using at least one electronic component positioned in the electronic device. However, a purpose of the present disclosure is not limited to the above-described contents. An exemplary electronic device (e.g., the electronic device 101 of FIG. 3A) may include a first housing (e.g., the first housing 210 of FIG. 3A), a second housing (e.g., the second housing 320 of FIG. 3A), a hinge structure (e.g., the hinge structure 260 of FIG. 3A), a display (e.g., the display 230 of FIG. 3A), an electromagnetic induction panel (e.g., the electromagnetic induction panel 310 of FIG. 3A), at least one electronic component (e.g., the at least one electronic component 320 of FIG. 3A), a processor (e.g., the processor 120 of FIG. 3C), and a memory (e.g., the memory 130 of FIG. 3C).

According to an embodiment, the first housing may include a first surface (e.g., the first surface 211 of FIG. 3A) and a second surface (e.g., the second surface 212 of FIG. 3A) that faces and is spaced apart from the first surface. The second housing may include a third surface (e.g., the third surface 221 of FIG. 3A) and a fourth surface (e.g., the fourth surface 222 of FIG. 3A) that faces and is spaced apart from the third surface. The hinge structure may rotatably couple the first housing and the second housing. The hinge structure may enable the electronic device to be switched into an unfolded state in which a direction in which the first surface faces and a direction in which the third surface faces are same, or a folded state in which the first surface and the third surface are opposite to each other. The display may be positioned above the first surface and the third surface, across the hinge structure. The electromagnetic induction panel may include a first portion (e.g., the first portion 301 of FIG. 3A) and a second portion (e.g., the second portion 302 of FIG. 3A). The first portion may be positioned between the second surface and the display. The second portion may be positioned between the fourth surface and the display. The electromagnetic induction panel may be configured to receive an input from an external electronic device (e.g., the external electronic device p of FIG. 3A). The at least one electronic component may be positioned between the electromagnetic induction panel and the second surface. The at least one electronic component may include a ferromagnetic material. The memory may be configured to store first data obtained based on a current value induced in the second portion, according to a change in a distance between the at least one electronic component and the second portion, in the direction in which the first surface faces. The processor may be configured to identify a state of the electronic device based on second data related to a current value induced in the second portion, according to a change in a distance between the at least one electronic component and the second portion, in the direction in which the first surface faces. According to an embodiment of the present disclosure, the processor may identify the state of the electronic device by using the at least one electronic component disposed in the electronic device and the electromagnetic induction panel for obtaining an external input. Since the electronic device uses a separate sensor (e.g., a hole sensor) to identify the state of the electronic device, other electronic components (e.g., a speaker, a camera, or a microphone) required to perform a function of the electronic device, and an electromagnetic induction panel, a mounting space in the electronic device may be secured. By securing the mounting space, design and manufacturing of the electronic device may be easy.

According to an embodiment, the electromagnetic induction panel may include a first layer (e.g., the first layer 311 of FIG. 3A), a second layer (e.g., the second layer 313 of FIG. 3A), and a third layer (e.g., the third layer 315 of FIG. 3A). The first layer may be positioned between the at least one electronic component and the display when the electronic device is in the unfolded state. The first layer may include a conductive material. The second layer may be positioned on the first layer. The second layer may be configured to shield an electromagnetic wave. The third layer may be positioned on the second layer. The third layer may include a conductive pattern forming at least one closed-loop.

According to an embodiment, the processor may be electrically coupled to the third layer. The processor may be configured to identify a current induced in the third layer. The processor may be configured to obtain the second data based on the current. According to an embodiment of the present disclosure, the processor may utilize existing wiring to identify the induced current of the third layer of the electromagnetic induction panel. The electronic device may reduce a manufacturing cost by utilizing the wiring to identify the electronic device.

According to an embodiment, the processor may be configured to obtain the second data based on a current induced in a region of the third layer facing the at least one electronic component when the electronic device is in the folded state. According to an embodiment of the present disclosure, the processor may be configured to identify the state of the electronic device by identifying an induced current formed in a region where the induced current is easy to identify.

According to an embodiment, the processor may be configured to obtain the second data based on identifying current values induced in the second portion by the ferromagnetic material, through the electromagnetic induction panel. The processor may be configured to identify the state of the electronic device by comparing the second data with the first data. According to an embodiment of the present disclosure, the processor may be configured to identify the state of the electronic device using the ferromagnetic material of the at least one electronic component by comparing the first data, which is reference data, with the second data related to the current value induced in the second portion.

According to an embodiment, the second data may be obtained based on magnitude and a direction of the current induced in the second portion by the ferromagnetic material. According to an embodiment of the present disclosure, the processor may easily distinguish the folded state or the unfolded state of the electronic device by obtaining the second data based on the magnitude of the current and the direction of the current.

According to an embodiment, the at least one electronic component may include at least one of a camera, a speaker, and a motor. According to an embodiment of the present disclosure, the at least one electronic component may be one of electrical materials included in the electronic device. The exemplary electronic device may identify the state of the electronic device by using the electrical material for various functions of the electronic device without using a hole sensor.

According to an embodiment, the first data may include a first range and a second range. The first range may be a range of current values induced in the second portion, when the electronic device is switched from the unfolded state to the folded state. The second range may be a range of current values induced in the second portion, when the electronic device is switched from the folded state to the unfolded state. The processor may be configured to identify a change in the state of the electronic device by comparing a value of the second data with the first range or the second range.

According to an embodiment, the processor may be configured to identify that the electronic device is switched from the unfolded state to the folded state, based on identifying that the current value indicated by the second data is included in the first range, when the electronic device is in the unfolded state. The processor may be configured to identify that the electronic device is switched from the folded state to the unfolded state, based on identifying that the current value indicated by the second data is included in the second range, when the electronic device is in the folded state.

According to an embodiment, the processor may be configured to identify that the state of the electronic device is maintained in the unfolded state, based on identifying that the current value indicated by the second data is outside the first range, when the electronic device is in the unfolded state. The processor may be configured to identify that the state of the electronic device is maintained in the folded state, based on identifying that the current value indicated by the second data is outside the second range, when the electronic device is in the folded state. According to an embodiment of the present disclosure, the processor may identify a switch to the unfolded state or a switch to the folded state of the electronic device, through whether the second data or the current value is included in the first range or the second range.

According to an embodiment, the at least one electronic component may include a first electronic component (e.g., the first electronic component 321 of FIG. 3A) and a second electronic component (e.g., the second electronic component 322 of FIG. 3A). The processor may be configured to identify a first current value induced in a first region (e.g., the first region 303 of FIG. 4B) related to the first electronic component of the second portion according to a change in a first distance (e.g., the first distance d1 of FIG. 4B) between the first electronic component and the second portion in the direction in which the first surface faces, and a second current value induced in a second region (e.g., the second region 304 of FIG. 4B) related to the second electronic component of the second portion according to a change in a second distance (e.g., the second distance d2 of FIG. 4B) between the second electronic component and the second portion in the direction in which the first surface faces. The processor may be configured to obtain third data based on the first current value. The processor may be configured to obtain fourth data based on the second current value. According to an embodiment of the present disclosure, the at least one electronic component may include two or more electronic components. According to an embodiment, the state of the electronic device may be accurately identified by identifying the state of the electronic device using the two or more electronic components.

According to an embodiment, the first data may include a third range, a fourth range, a fifth range, and a sixth range. The third range may be a range of current values obtained based on the first current value, when the electronic device is switched from the unfolded state to the folded state. The fourth range may be a range of current values obtained based on the second current value, when the electronic device is switched from the unfolded state to the folded state. The fifth range may be a range of current values obtained based on the first current value, when the electronic device is switched from the folded state to the unfolded state. The sixth range may be a range of current values obtained based on the second current value, when the electronic device is switched from the folded state to the unfolded state. The processor may be configured to identify that the electronic device is switched from the unfolded state to the folded state, based on identifying that a value of the third data is included in the third range and a value of the fourth data is included in the fourth range, when the electronic device is in the unfolded state. The processor may be configured to identify that the electronic device is switched from the folded state to the unfolded state, based on identifying that the value of the third data is included in the fifth range and the value of the fourth data is included in the sixth range when the electronic device is in the folded state.

According to an embodiment, the processor may be configured to identify that the electronic device 101 is maintained in the unfolded state, based on identifying that the value of the third data is not included in the third range or the value of the fourth data is not included in the fourth range when the electronic device is in the unfolded state. The processor may be configured to identify that the electronic device is maintained in the folded state, based on identifying that the value of the third data is not included in the fifth range or the value of the fourth data is not included in the sixth range, when the electronic device is in the folded state. According to an embodiment of the present disclosure, the processor may identify the state of the electronic device based on a current value of the induced current by two or more electronic components. According to an embodiment, the processor may accurately identify the state of the electronic device by identifying the state of the electronic device based on a current value of the induced current formed in two or more regions.

According to an embodiment, the first region may be a region of the second portion facing the first electronic component, when the electronic device is in the folded state. According to an embodiment, the second region may be a region of the second portion facing the second electronic component, when the electronic device is in the folded state. According to an embodiment of the present disclosure, the processor may be configured to identify an induced current in a region where the induced current is easy to identify by two or more electronic components among the electromagnetic induction panels.

According to an embodiment, the processor may be configured to, based on the second data, transmit a signal requesting inactivation of the display 230 to the display 230, in response to identifying that the electronic device is switched from the unfolded state to the folded state. The processor may be configured to, based on the second data, transmit a signal requesting activation of the display to the display, in response to identifying of being switched from the folded state to the unfolded state. According to an embodiment of the present disclosure, the processor may be configured to adjust activation or inactivation of the display based on the state of the electronic device. The exemplary electronic device may reduce unnecessary power consumption.

An exemplary electronic device (e.g., the electronic device 101 of FIG. 7A) may comprise a first housing (e.g., the first housing 710 of FIG. 7A), a second housing (e.g., the second housing 720 of FIG. 7A), a third housing (e.g., the third housing 730 of FIG. 7A), a first hinge structure (e.g., the first hinge structure 741 of FIG. 7A), a second hinge structure (e.g., the second hinge structure 742 of FIG. 7A), a display (e.g., the display 750 of FIG. 7A), an electromagnetic induction panel (e.g., the electromagnetic induction panel 760 of FIG. 8B), at least one electronic component (e.g., the at least one electronic component 320 of FIG. 7A), a magnet (e.g., the magnet 780 of FIG. 7A), a sensor (e.g., the sensor 790 of FIG. 7A), a processor (e.g., the processor 120 of FIG. 7C), and a memory (e.g., the memory 130 of FIG. 7C).

According to an embodiment, the first housing may include a first surface (e.g., the first surface 711 of FIG. 7A) and a second surface (e.g., the second surface 712 of FIG. 7A) that faces and is spaced apart from the first surface. The second housing may include a third surface (e.g., the third surface 721 of FIG. 7A) and a fourth surface (e.g., the fourth surface 722 of FIG. 7A) that faces and is spaced apart from the third surface. The third housing may include a fifth surface (e.g., the fifth surface 731 of FIG. 7A) and a sixth surface (e.g., the sixth surface 732 of FIG. 7A) that faces and is spaced apart from the fifth surface. The first hinge structure may rotatably couple the first housing and the second housing. The first hinge structure may enable the electronic device to be switchable into a first unfolded state in which a direction in which the first surface faces and a direction in which the third surface faces are same, or a first folded state in which the first surface and the third surface face each other. The second hinge structure may rotatably couple the first housing and the third housing. The second hinge structure may enable the electronic device to be switchable into a second unfolded state in which the direction in which the first surface faces and a direction in which the fifth surface faces are same, or a second folded state in which the first surface and the fifth surface face each other. The display may be positioned above the first surface, the third surface, and the fifth surface, across the first hinge structure and the second hinge structure. The electromagnetic induction panel may include a first portion (e.g., the first portion 760a of FIG. 8B), a second portion (e.g., the second portion 760b of FIG. 8B), and a third portion (e.g., the third portion 760c of FIG. 8B). The first portion may be positioned between the second surface and the display. The second portion may be positioned between the fourth surface and the display. The third portion may be positioned between the sixth surface and the display. The electromagnetic induction panel may be configured to receive an input from an external electronic device (e.g., the external electronic device p of FIG. 8B). The at least one electronic component may be positioned between the electromagnetic induction panel and the second surface. The at least one electronic component may include a ferromagnetic material. The magnet may be positioned in the second housing. The sensor may be positioned in the third housing. The sensor may be configured to detect magnetic force of the magnet. The memory may be configured to store first data obtained based on a current induced in the second portion according to a change in a distance between the at least one electronic component and the second portion in the direction in which the first surface faces. The processor may be configured to identify the first folded state or the first unfolded state, based on second data related to a current induced in the second portion according to a change in the distance between the at least one electronic component and the second portion in the direction in which the first surface faces. The processor may be configured to identify the second folded state or the second unfolded state, based on third data related to a change in magnetic force according to a change in a distance between the sensor and the magnet detected through the sensor. According to an embodiment of the present disclosure, the processor may identify the state of the electronic device by using the at least one electronic component disposed in the electronic device and the electromagnetic induction panel for obtaining an external input. Since the electronic device uses electronic components (e.g., a speaker, a camera, or a microphone) that required to perform a function of the electronic device and an electromagnetic induction panel instead of a separate sensor (e.g., a hole sensor) to identify the state of the electronic device, a mounting space in the electronic device may be secured. By securing the mounting space, design and manufacturing of the electronic device may be easy.

According to an embodiment, the electromagnetic induction panel may include a first layer (e.g., the first layer 761 of FIG. 8B), a second layer (e.g., the second layer 763 of FIG. 8B), and a third layer (e.g., the third layer 765 of FIG. 8B). The first layer may be positioned between the at least one electronic component and the display, when the electronic device is in the unfolded state. The first layer may include a conductive material. The second layer may be positioned on the first layer. The second layer may be configured to shield an electromagnetic wave. The third layer may be positioned on the second layer. The third layer may include a conductive pattern forming at least one closed-loop. The processor may utilize existing wiring for identifying an induced current of the third layer of the electromagnetic induction panel. The electronic device may reduce a manufacturing cost by utilizing the wiring to identify the electronic device.

According to an embodiment, the processor may be configured to obtain the second data based on identifying current values induced in the second portion by the ferromagnetic material, through the electromagnetic induction panel. The processor may be configured to identify the first folded state or the second unfolded state of the electronic device by comparing the second data with the first data. According to an embodiment of the present disclosure, the processor may be configured to identify the state of the electronic device using the ferromagnetic material of the at least one electronic component by comparing the first data, which is reference data, with the second data related to the current value induced in the second portion.

According to an embodiment, the at least one electronic component may include at least one of a camera, a speaker, and a motor. According to an embodiment of the present disclosure, the at least one electronic component may be one of electrical materials included in the electronic device. The exemplary electronic device may identify the state of the electronic device by using the electric material for various functions of the electronic device without using a hole sensor.

According to an embodiment, the processor may be configured to, based on the second data, transmit a signal requesting inactivation of at least a portion of the display to the display, in response to identifying that the electronic device is switched from the first unfolded state to the first folded state. The processor may be configured to, based on the second data, transmit a signal requesting activation of the at least a portion of the display to the display, in response to identifying of being switched from the first folded state to the first unfolded state. The processor may be configured to, based on the third data, transmit a signal requesting inactivation of the at least a portion of the display to the display, in response to identifying that the electronic device is switched from the second unfolded state to the second folded state. The processor may be configured to, based on the third data, transmit a signal requesting activation of the at least a portion of the display to the display, in response to identifying of being switched from the second folded state to the second unfolded state. According to an embodiment of the present disclosure, the processor may be configured to adjust activation or inactivation of the display, based on the state of the electronic device. The exemplary electronic device may reduce unnecessary power consumption.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a first housing (210; 710) including a first surface (211; 711) and a second surface (212; 712) opposite to the first surface (211; 711);
a second housing (220; 720) including a third surface (221; 721) and a fourth surface (222; 722) opposite to the third surface (221; 721);
a hinge structure (260; 741) capable of being switched between an unfolded state in which a direction in which the first surface (211; 711) faces and a direction in which the third surface (221; 721) faces are same and a folded state in which the first surface (211; 711) and the third surface (221; 721) face each other, by rotatably connecting the first housing (210; 710) and the second housing (220; 720);
a display (230; 750) disposed above the first surface (211; 711) and the third surface (221; 721), across the hinge structure (260; 741);
an electromagnetic induction panel (310; 760), configured to receive an input from an external electronic device (p), including a first portion (301; 760a) disposed between the second surface (212; 712) and the display (230; 750), and a second portion (302; 760b) disposed between the fourth surface (222; 722) and the display (230; 750);
at least one electronic component (320), disposed between the electromagnetic induction panel (310; 760) and the second surface (212; 712), including a ferromagnetic material;
a processor (120); and
a memory (130) configured to store first data obtained based on a current value induced in the second portion (302; 760b) according to a change in a distance between the at least one electronic component (320) and the second portion (302; 760b) in the direction in which the first surface (211; 711) faces,
wherein the processor (120) is configured to identify a state of the electronic device (101), based on second data related to the current value induced in the second portion (302; 760b) according to a change in the distance between the at least one electronic component (320) and the second portion (302; 760b) in the direction in which the first surface (211; 711) faces.

2. The electronic device (101) of claim 1,
wherein, the electromagnetic induction panel (310; 760) includes:
a first layer (311), comprising a conductive material, disposed between the at least one electronic component (320) and the display (230; 750), , when the electronic device (101) is in the unfolded state,
a second layer (313), disposed on the first layer (311), configured to shield an electromagnetic wave, and
a third layer (315), disposed on the second layer (313), comprising a conductive pattern forming at least one closed loop.

3. The electronic device (101) of any one of claim 1 and 2,
wherein the processor (120) is electrically connected to the third layer (315), identifies a current induced in the third layer (315), and is configured to obtain the second data based on the current.

4. The electronic device (101) of any one of claim 1 to 3,
wherein the processor (120) is configured to obtain the second data based on a current induced in a region of the third layer (315) facing the at least one electronic component (320), when the electronic device (101) is in the folded state.

5. The electronic device (101) of any one of claim 1 to 4,
wherein the processor (120) is configured to:
obtain the second data based on identifying current values induced in the second portion (302; 760b) by the ferromagnetic material, through the electromagnetic induction panel (310; 760), and
identify the state of the electronic device (101) by comparing the second data with the first data.

6. The electronic device (101) of any one of claim 1 to 5,
wherein the second data is obtained based on magnitude and a direction of the current induced in the second portion (302; 760b) by the ferromagnetic material.

7. The electronic device (101) of any one of claim 1 to 6,
wherein the at least one electronic component (320) includes at least one of a camera, a speaker, and a motor.

8. The electronic device (101) of any one of claim 1 to 7,
wherein the first data comprises:
a first range of current values induced in the second portion (302; 760b), when the electronic device (101) is switched from the unfolded state to the folded state, and
a second range of current values induced in the second portion (302; 760b), when the electronic device (101) is switched from the folded state to the unfolded state, and
wherein the processor (120) is configured to identify a change in the state of the electronic device (101) by comparing a value of the second data with the first range or the second range.

9. The electronic device (101) of any one of claim 1 to 8,
wherein the processor (120) is configured to:
identify that the electronic device (101) is switched from the unfolded state to the folded state based on identifying that the current value indicated by the second data is included in the first range, when the electronic device (101) is in the unfolded state, and
identify that the electronic device (101) is switched from the folded state to the unfolded state based on identifying that the current value indicated by the second data is included in the second range, when the electronic device (101) is in the folded state.

10. The electronic device (101) of any one of claim 1 to 9,
wherein the processor (120) is configured to:
identify that the state of the electronic device (101) is maintained in the unfolded state based on identifying that the current value indicated by the second data is outside the first range, when the electronic device (101) is in the unfolded state, and
identify that the state of the electronic device (101) is maintained in the folded state based on identifying that the current value indicated by the second data is outside the second range, when the electronic device (101) is in the folded state.

11. The electronic device (101) of any one of claim 1 to 10,
wherein the at least one electronic component (320) includes a first electronic component (321) and a second electronic component (322),
wherein the processor (120) is configured to:
identify a first current value induced in a first region (303) related to the first electronic component (321) of the second portion (302; 760b) according to a change in a first distance (d1) between the first electronic component (321) and the second portion (302; 760b) in the direction in which the first surface (211; 711) faces, and a second current value induced in a second region (304) related to the second electronic component (322) of the second portion (302; 760b) according to a change in a second distance (d2) between the second electronic component (322) and the second portion (302; 760b) in the direction in which the first surface (211; 711) faces, and
obtain third data based on the first current value and fourth data based on the second current value.

12. The electronic device (101) of any one of claim 1 to 11,
wherein the first data comprises:
a third range of current values obtained based on the first current value, when the electronic device (101) is switched from the unfolded state to the folded state,
a fourth range of current values obtained based on the second current value, when the electronic device (101) is switched from the unfolded state to the folded state,
a fifth range of current values obtained based on the first current value, when the electronic device (101) is switched from the folded state to the unfolded state, and
a sixth range of current values obtained based on the second current value, when the electronic device (101) is switched from the folded state to the unfolded state,
wherein the processor (120) is configured to:
identify that the electronic device (101) is switched from the unfolded state to the folded state based on identifying that a value of the third data is included in the third range and that a value of the fourth data is included in the fourth range, when the electronic device (101) is in the unfolded state, and
identify that the electronic device (101) is switched from the folded state to the unfolded state based on identifying that the value of the third data is included in the fifth range and that the value of the fourth data is included in the sixth range, when the electronic device (101) is in the folded state.

13. The electronic device (101) of any one of claim 1 to 12,
wherein the processor (120) is configured to:
identify that the state of the electronic device (101) is maintained in the unfolded state based on identifying that the value of the third data is not included in the third range or that the value of the fourth data is not included in the fourth range, when the electronic device (101) is in the unfolded state, and
identify that the state of the electronic device (101) is maintained in the folded state based on identifying that the value of the third data is not included in the fifth range or that the value of the fourth data is not included in the sixth range, when the electronic device (101) is in the folded state.

14. The electronic device (101) of any one of claim 1 to 13,
wherein the first region (303) is a region of the second portion (302; 760b) that faces the first electronic component (321), when the electronic device (101) is in the folded state, and
wherein the second region (304) is a region of the second portion (302; 760b) that faces the second electronic component (322), when the electronic device (101) is in the folded state.

15. The electronic device (101) of any one of claim 1 to 14,
wherein the processor (120) is configured to:
based on the second data, in response to identifying that the electronic device (101) is switched from the unfolded state to the folded state, transmit a signal requesting deactivation of the display (230; 750) to the display (230; 750), and
based on the second data, in response to identifying that the electronic device (101) is switched from the folded state to the unfolded state, transmit a signal requesting activation of the display (230; 750) to the display (230; 750).
